# EUROPEAN PATENT APPLICATION

(11) **EP 4 456 578 A1**
(43) Date of publication of application: **30.10.2024**
(21) Application number: 22918412.2
(22) Date of filing: 22.12.2022
(51) Int. Cl.: H04W 8/14

(54) **COMMUNICATION METHOD AND COMMUNICATION APPARATUS**

(30) Priority: 07.01.2022 CN 202210015654
(71) Applicant: Huawei Technologies Co., Ltd., Shenzhen, Guangdong 518129 (CN)
(72) Inventor: QI, Caixia, Shenzhen, Guangdong 518129 (CN); JING, Hao, Shenzhen, Guangdong 518129 (CN)
(74) Representative: Körber, Martin Hans
(86) International application number: PCT/CN2022/140924
(87) International publication number: WO 2023/130969

(57) **Abstract**

This application provides a communication method and a communication apparatus. In the method, a target session management function may distinguish between intra-communication network communication (that is, a communication network to which user equipment belongs does not change) and inter-communication network communication (that is, the communication network to which the user equipment belongs changes) based on an identifier of a communication network to which a source session management function belongs and/or address information of the source session management function, to ensure normal communication between the target session management function and the source session management function.

## Description

This application claims priority to Chinese Patent Application No. 202210015654.6, filed with the China National Intellectual Property Administration on January 7, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A communication network supports roaming networking and non-roaming networking. In the non-roaming networking, network devices in a same communication network can be interconnected. In the roaming networking, network devices in different communication networks can be interconnected. To ensure security of a communication system, when supporting both the roaming networking and the non-roaming networking, the network device isolates intra-communication network communication from inter-communication network communication. For example, the network device allocates different internet protocol (internet protocol, IP) addresses or fully qualified domain names (fully qualified domain names, FQDNs) for the intra-communication network communication and the inter-communication network communication. For another example, the network devices in the different communication networks communicate with each other by using a security proxy device.

However, currently, the network device cannot determine whether communication with another network device is the intra-communication network communication or the inter-communication network communication. This may cause a failure in the communication between the network devices.

### SUMMARY

This application provides a communication method and a communication apparatus, so that a network device can distinguish between intra-communication network communication and inter-communication network communication, thereby ensuring normal communication between network devices.

According to a first aspect, a communication method is provided. The method may be performed by a target session management function, or may be performed by a module or a unit used in the target session management function. For ease of description, this is uniformly referred to as a target session management function below.

The method is applied to movement of user equipment from a source session management function to the target session management function, and the method includes: The target session management function receives first information from a target access and mobility management function of the user equipment, where the first information includes an identifier of a communication network to which the source session management function belongs and/or address information of the source session management function. When the target session management function determines, based on the first information, that a communication network to which the user equipment belongs changes, the target session management function sends a first message to the source session management function by using a security proxy device; and/or when the target session management function determines, based on the first information, that the communication network to which the user equipment belongs does not change, the target session management function sends the first message to the source session management function without using the security proxy device. The first message is used to obtain a session management context of the user equipment.

In the foregoing technical solution, the target session management function may distinguish between intra-communication network communication (that is, the communication network to which user equipment belongs does not change) and inter-communication network communication (that is, the communication network to which user equipment belongs changes) based on the identifier of the communication network to which the source session management function belongs and/or the address information of the source session management function, to ensure normal communication between the target session management function and the source session management function.

With reference to the first aspect, in a possible implementation, the method further includes: The target session management function receives a first uniform resource identifier (uniform resource identifier, URI) from the target access and mobility management function, where the first URI is a URI of a session management context of the source session management function; and an FQDN in the first URI is an FQDN of the source session management function, and/or an IP address in the first URI is an IP address of the source session management function. That the target session management function sends a first message to the source session management function by using a security proxy device includes: The target session management function determines a second URI based on the first URI. The target session management function sends the first message to the security proxy device based on the second URI. The second URI includes an FQDN of the security proxy device and/or an IP address of the security proxy device, the first message includes the FQDN of the source session management function and/or the IP address of the source session management function, and the FQDN of the source session management function and/or the IP address of the source session management function are/is used by the security proxy device to send the first message to the source session management function.

The FQDN of the source session management function is an inter-network FQDN of the source session management function, and/or the IP address of the source session management function is an inter-network IP address of the source session management function.

In the foregoing technical solution, the target session management function determines the second URI based on the first URI of the session management context of the source session management function, and sends the first message based on the second URI including the FQDN of the security proxy device and/or the IP address of the security proxy device, to send the first message to the source session management function by using the security proxy device.

With reference to the first aspect or any implementation of the first aspect, in another possible implementation, an FQDN in the second URI is the FQDN of the security proxy device, and/or an IP address in the second URI is the IP address of the security proxy device. Alternatively, an FQDN in the second URI is a telescopic FQDN, and the telescopic FQDN includes the FQDN of the security proxy device.

With reference to the first aspect or any implementation of the first aspect, in another possible implementation, the first information includes the identifier of the communication network to which the source session management function belongs. That the target session management function determines, based on the first information, that a communication network to which the user equipment belongs changes includes: When the identifier of the communication network to which the source session management function belongs is different from an identifier of a communication network to which the target session management function belongs, the target session management function determines that the communication network to which the user equipment belongs changes.

In the foregoing technical solution, the target session management function may determine, based on the identifier of the communication network to which the source session management function belongs and the identifier of the communication network to which the target session management function belongs, that the communication network to which the user equipment belongs changes, to send the first message to the source session management function by using the security proxy device, thereby ensuring communication security.

With reference to the first aspect or any implementation of the first aspect, in another possible implementation, the first information includes the address information of the source session management function. That the target session management function determines, based on the first information, that a communication network to which the user equipment belongs changes includes: When the address information is inter-network address information of the source session management function, the target session management function determines that the communication network to which the user equipment belongs changes.

In the foregoing technical solution, the target session management function may determine, based on the address information of the source session management function, that the communication network to which the user equipment belongs changes, to send the first message to the source session management function by using the security proxy device, thereby ensuring communication security.

With reference to the first aspect or any implementation of the first aspect, in another possible implementation, the inter-network address information includes an inter-network FQDN of the source session management function and/or an inter-network IP address of the source session management function.

With reference to the first aspect or any implementation of the first aspect, in another possible implementation, the first information is the identifier of the communication network to which the source session management function belongs. That the target session management function determines, based on the first information, that the communication network to which the user equipment belongs does not change includes: When the identifier of the communication network to which the source session management function belongs is the same as an identifier of a communication network to which the target session management function belongs, the target session management function determines that the communication network to which the user equipment belongs does not change.

In the foregoing technical solution, the target session management function may determine, based on the identifier of the communication network to which the source session management function belongs and the identifier of the communication network to which the target session management function belongs, that the communication network to which the user equipment belongs does not change, to directly send the first message to the source session management function without using the security proxy device, thereby reducing a latency of transmitting the first message.

With reference to the first aspect or any implementation of the first aspect, in another possible implementation, the first information is the address information of the source session management function. That the target session management function determines, based on the first information, that the communication network to which the user equipment belongs does not change includes: When the address information is intra-network address information of the source session management function, the target session management function determines that the communication network to which the user equipment belongs does not change.

In the foregoing technical solution, the target session management function may determine, based on the address information of the source session management function, that the communication network to which the user equipment belongs does not change, to directly send the first message to the source session management function without using the security proxy device, thereby reducing a latency of transmitting the first message.

With reference to the first aspect or any implementation of the first aspect, in another possible implementation, the intra-network address information includes an intra-network FQDN of the source session management function and/or an intra-network IP address of the source session management function.

With reference to the first aspect or any implementation of the first aspect, in another possible implementation, the first information is carried in the first uniform resource identifier URI of the session management context of the source session management function. In this case, that the target session management function receives first information from a target access and mobility management function of the user equipment and that the target session management function receives a first URI from the target access and mobility management function may be a same step.

With reference to the first aspect or any implementation of the first aspect, in another possible implementation, the communication network to which the source session management function belongs is a home network of the user equipment, the first message includes third information, and the third information indicates that the target session management function is a visited session management function or an intermediate session management function, or the third information indicates the communication network to which the target session management function belongs.

In the foregoing technical solution, when the communication network to which the source session management function belongs is the home network of the user equipment, the target session management function may provide the third information for the source session management function, so that the source session management function may determine, based on the third information, whether the session management context is obtained by the visited session management function or the intermediate session management function, to return the correct session management context to the target session management function.

With reference to the first aspect or any implementation of the first aspect, in another possible implementation, the communication network to which the source session management function belongs is the home network of the user equipment, and the communication network to which the target session management function belongs is a visited network of the user equipment. Alternatively, the communication network to which the source session management function belongs is a first visited network of the user equipment, the communication network to which the target session management function belongs is a second visited network of the user equipment, and the first visited network is different from the second visited network. Alternatively, the communication network to which the source session management function belongs is a first visited network of the user equipment, the communication network to which the target session management function belongs is a second visited network of the user equipment, and the first visited network is the same as the second visited network. Alternatively, the communication network to which the source session management function belongs is a visited network of the user equipment, and the communication network to which the target session management function belongs is a home network of the user equipment.

According to a second aspect, a communication method is provided. The method may be performed by a target access and mobility management function, or may be performed by a module or a unit used in the target access and mobility management function. For ease of description, this is uniformly referred to as a target access and mobility management function below.

The method is applied to movement of user equipment from a source access and mobility management function to the target access and mobility management function, and the method includes: The target access and mobility management function receives, from the source access and mobility management function, an identifier of a communication network to which the source access and mobility management function belongs. When the target access and mobility management function determines, based on the identifier of the communication network to which the source access and mobility management function belongs, that a communication network to which the user equipment belongs changes, the target access and mobility management function sends first information to a target session management function of the user equipment, where the first information includes inter-network address information of a source session management function; and/or when the target access and mobility management function determines, based on the identifier of the communication network to which the source access and mobility management function belongs, that the communication network to which the user equipment belongs does not change, the target access and mobility management function sends the first information to the target session management function of the user equipment, where the first information includes intra-network address information of the source session management function.

In the foregoing technical solution, the target access and mobility management function may distinguish between intra-communication network communication (that is, the communication network to which the user equipment belongs does not change) and inter-communication network communication (that is, the communication network to which the user equipment belongs changes) based on the identifier of the communication network to which the source session management function belongs, and provide the inter-network address information of the source session management function for the target session management function when the communication network to which the user equipment belongs changes, and/or provide the intra-network address information of the source session management function for the target session management function when the communication network to which the user equipment belongs does not change, so that the target session management function may obtain a session management context from the source session management function by using the proper address information, thereby ensuring normal communication between the target session management function and the source session management function.

With reference to the second aspect, in a possible implementation, the first information is carried in a first uniform resource identifier URI of a session management context of the source session management function.

With reference to the second aspect or any implementation of the second aspect, in another possible implementation, the inter-network address information is an inter-network fully qualified domain name FQDN and/or an inter-network internet protocol IP address; and/or the intra-network address information is an intra-network FQDN and/or an intra-network IP address.

With reference to the second aspect or any implementation of the second aspect, in another possible implementation, the method further includes: The target access and mobility management function receives an identifier of the source session management function from the source access and mobility management function. The target access and mobility management function obtains the inter-network address information of the source session management function locally or from a network repository function based on the identifier of the source session management function.

For example, the target access and mobility management function receives the identifier of the source session management function from the source access and mobility management function. The target access and mobility management function obtains registration information of the source session management function locally or from the network repository function based on the identifier of the source session management function, where the registration information includes the inter-network address information of the source session management function.

With reference to the second aspect or any implementation of the second aspect, in another possible implementation, that the target access and mobility management function determines, based on the identifier of the communication network to which the source access and mobility management function belongs, that a communication network to which the user equipment belongs changes includes: When the identifier of the communication network to which the source access and mobility management function belongs is different from an identifier of a communication network to which the target access and mobility management function belongs, the target access and mobility management function determines that the communication network to which the user equipment belongs changes.

In the foregoing technical solution, the target access and mobility management function may determine, based on the identifier of the communication network to which the source session management function belongs and the identifier of the communication network to which the target access and mobility management function belongs, that the communication network to which the user equipment belongs changes, to provide the inter-network address information of the source session management function for the target session management function, so that the target session management function may obtain the session management context from the source session management function by using the proper address information, thereby ensuring normal communication between the target session management function and the source session management function.

With reference to the second aspect or any implementation of the second aspect, in another possible implementation, that the target access and mobility management function determines, based on the identifier of the communication network to which the source access and mobility management function belongs, that the communication network to which the user equipment belongs does not change includes: When the identifier of the communication network to which the source access and mobility management function belongs is the same as an identifier of a communication network to which the target access and mobility management function belongs, the target access and mobility management function determines that the communication network to which the user equipment belongs does not change.

In the foregoing technical solution, the target access and mobility management function may determine, based on the identifier of the communication network to which the source session management function belongs and the identifier of the communication network to which the target access and mobility management function belongs, that the communication network to which the user equipment belongs does not change, to provide the intra-network address information of the source session management function for the target session management function, so that the target session management function may obtain the session management context from the source session management function by using the proper address information, thereby ensuring normal communication between the target session management function and the source session management function.

With reference to the second aspect or any implementation of the second aspect, in another possible implementation, the identifier of the communication network to which the source access and mobility management function belongs is carried in a uniform resource identifier URI of a second message.

With reference to the second aspect or any implementation of the second aspect, in another possible implementation, the first information further includes the identifier of the communication network to which the source access and mobility management function belongs.

With reference to the second aspect or any implementation of the second aspect, in another possible implementation, the communication network to which the source access and mobility management function belongs is a home network of the user equipment, and the communication network to which the target access and mobility management function belongs is a visited network of the user equipment. Alternatively, the communication network to which the source access and mobility management function belongs is a first visited network of the user equipment, the communication network to which the target access and mobility management function belongs is a second visited network of the user equipment, and the first visited network is different from the second visited network. Alternatively, the communication network to which the source access and mobility management function belongs is a first visited network of the user equipment, the communication network to which the target access and mobility management function belongs is a second visited network of the user equipment, and the first visited network is the same as the second visited network. Alternatively, the communication network to which the source access and mobility management function belongs is a visited network of the user equipment, and the communication network to which the target access and mobility management function belongs is a home network of the user equipment.

According to a third aspect, a communication method is provided. The method may be performed by a source session management function, or may be performed by a module or a unit used in the source session management function. For ease of description, this is uniformly referred to as a source session management function below.

The method is applied to movement of user equipment from the source session management function to a target session management function, and the method includes: The source session management function receives a first message from the target session management function, where the first message is used to obtain a session management context of the user equipment, the first message includes third information, and the third information indicates that the target session management function is a visited session management function or an intermediate session management function, or the third information indicates a communication network to which the target session management function belongs. The source session management function sends the session management context of the user equipment to the target session management function based on the first message.

In the foregoing technical solution, the target access and mobility management function may distinguish between intra-communication network communication (that is, a communication network to which the user equipment belongs does not change) and inter-communication network communication (that is, the communication network to which the user equipment belongs changes) based on an identifier of a communication network to which the source session management function belongs, and provide inter-network address information of the source session management function for the target session management function when the communication network to which the user equipment belongs changes, and/or provide intra-network address information of the source session management function for the target session management function when the communication network to which the user equipment belongs does not change, so that the target session management function may obtain the session management context from the source session management function by using the proper address information, thereby ensuring normal communication between the target session management function and the source session management function.

In the foregoing technical solution, the source session management function may determine, based on the third information provided by the target session management function, whether the session management context is obtained by a visited session management function or an intermediate session management function, to return the correct session management context to the target session management function.

With reference to the third aspect, in a possible implementation, that the source session management function sends the session management context of the user equipment to the target session management function based on the first message includes: When the source session management function receives the first message from the target session management function by using a security proxy device, the source session management function sends the session management context of the user equipment to the target session management function by using the security proxy device; and/or when the source session management function receives the first message from the target session management function without using the security proxy device, the source session management function sends the session management context of the user equipment to the target session management function without using the security proxy device.

With reference to the third aspect or any implementation of the third aspect, in another possible implementation, that the source session management function sends the session management context of the user equipment to the target session management function based on the first message includes: When the third information in the first message indicates that the target session management function is the visited session management function, the source session management function sends a roaming session management context of the user equipment to the target session management function; when the third information in the first message indicates that the target session management function is the intermediate session management function, the source session management function sends a non-roaming session management context of the user equipment to the target session management function; when the third information in the first message indicates the communication network to which the target session management function belongs, and the communication network to which the target session management function belongs is different from a communication network to which the source session management function belongs, the source session management function sends the roaming session management context of the user equipment to the target session management function; and/or when the third information in the first message indicates the communication network to which the target session management function belongs, and the communication network to which the target session management function belongs is the same as the communication network to which the source session management function belongs, the source session management function sends the non-roaming session management context of the user equipment to the target session management function.

The roaming session management context may be a home session management context, and may specifically include at least one of the following information: a URI of a home session management function (hSmfUri), a home network slice identifier (hplmnSnssai), a home session management function instance identifier (hSmflnstanceId), or a home session management function service instance identifier (hSmfServiceInstanceId).

The non-roaming session management context may be a session management context, and may specifically include at least one of the following information: a URI of a session management function (SmfUri), a session management function instance identifier (SmflnstanceId), or a session management function service instance identifier (SmfServiceInstanceId).

With reference to the third aspect or any implementation of the third aspect, in another possible implementation, the communication network to which the source session management function belongs is a home network of the user equipment, and the communication network to which the target session management function belongs is a visited network of the user equipment. Alternatively, the communication network to which the source session management function belongs is a first visited network of the user equipment, the communication network to which the target session management function belongs is a second visited network of the user equipment, and the first visited network is different from the second visited network. Alternatively, the communication network to which the source session management function belongs is a first visited network of the user equipment, the communication network to which the target session management function belongs is a second visited network of the user equipment, and the first visited network is the same as the second visited network. Alternatively, the communication network to which the source session management function belongs is a visited network of the user equipment, and the communication network to which the target session management function belongs is a home network of the user equipment.

According to a fourth aspect, a communication method is provided. The method may be performed by a source access and mobility management function, or may be performed by a module or a unit used in the source access and mobility management function. For ease of description, this is uniformly referred to as a source access and mobility management function below.

The method is applied to movement of user equipment from a source access and mobility management function to the target access and mobility management function, and the method includes: The source access and mobility management function determines an identifier of a communication network to which the source access and mobility management function belongs. The source access and mobility management function sends, to the target source access and mobility management function, the identifier of the communication network to which the source access and mobility management function belongs.

In the foregoing technical solution, the source access and mobility management function may determine the identifier of the communication network to which the source session management function belongs, and send the identifier of the communication network to the target access and mobility management function, so that the target access and mobility management function can distinguish between intra-communication network communication (that is, a communication network to which the user equipment belongs does not change) and inter-communication network communication (that is, the communication network to which the user equipment belongs changes) based on the identifier of the communication network to which the source session management function belongs.

With reference to the fourth aspect, in a possible implementation, the method further includes: The source access and mobility management function sends an identifier of the source session management function to the target access and mobility management function.

With reference to the fourth aspect or any implementation of the fourth aspect, in another possible implementation, the identifier of the communication network to which the source access and mobility management function belongs is carried in a URI of a second message.

With reference to the fourth aspect or any implementation of the fourth aspect, in another possible implementation, the communication network to which the source access and mobility management function belongs is a home network of the user equipment, and the communication network to which the target access and mobility management function belongs is a visited network of the user equipment. Alternatively, the communication network to which the source access and mobility management function belongs is a first visited network of the user equipment, the communication network to which the target access and mobility management function belongs is a second visited network of the user equipment, and the first visited network is different from the second visited network. Alternatively, the communication network to which the source access and mobility management function belongs is a first visited network of the user equipment, the communication network to which the target access and mobility management function belongs is a second visited network of the user equipment, and the first visited network is the same as the second visited network. Alternatively, the communication network to which the source access and mobility management function belongs is a visited network of the user equipment, and the communication network to which the target access and mobility management function belongs is a home network of the user equipment.

According to a fifth aspect, a communication apparatus is provided. The apparatus is configured to perform the method according to any one of the foregoing aspects or the implementations of the foregoing aspects. Specifically, the apparatus may include units and/or modules configured to perform the method according to any one of the foregoing aspects or the implementations of the foregoing aspects, for example, a processing unit and/or a communication unit.

In an implementation, the apparatus is a target session management function, a target access and mobility management function, a source session management function, or a source access and mobility management function. When the apparatus is the target session management function, the target access and mobility management function, the source session management function, or the source access and mobility management function, the communication unit may be a transceiver or an input/output interface; and the processing unit may be at least one processor. Optionally, the transceiver is a transceiver circuit. Optionally, the input/output interface is an input/output circuit.

In another implementation, the apparatus is a chip, a chip system, or a circuit used in a target session management function, a target access and mobility management function, a source session management function, or a source access and mobility management function. When the apparatus is the chip, the chip system, or the circuit used in the target session management function, the target access and mobility management function, the source session management function, or the source access and mobility management function, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes: a memory, configured to store a computer program or instructions; and at least one processor, configured to execute the computer program or instructions stored in the memory, to perform the method according to any one of the foregoing aspects or the implementations of the foregoing aspects.

In an implementation, the apparatus is a target session management function, a target access and mobility management function, a source session management function, or a source access and mobility management function.

In another implementation, the apparatus is a chip, a chip system, or a circuit used in a target session management function, a target access and mobility management function, a source session management function, or a source access and mobility management function.

According to a seventh aspect, a processor is provided, and is configured to perform the methods according to the foregoing aspects.

Operations such as sending and obtaining/receiving related to the processor may be understood as operations such as outputting and receiving or inputting performed by the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code to be executed by a device, and the program code includes the method according to any one of the foregoing aspects or the implementations of the foregoing aspects.

According to a ninth aspect, a computer program product including instructions is provided. When the computer program product runs on a computer, the computer is enabled to perform the method according to any one of the foregoing aspects or the implementations of the foregoing aspects.

According to a tenth aspect, a chip is provided. The chip includes a processor and a communication interface, and the processor reads, through the communication interface, instructions stored in a memory, to perform the method according to any one of the foregoing aspects or the implementations of the foregoing aspects.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the foregoing aspects or the implementations of the foregoing aspects.

According to an eleventh aspect, a communication system is provided, including the target session management function, the target access and mobility management function, the source session management function, and the source access and mobility management function that are described above.

### BRIEF DESCRIPTION OF DRAWINGS

FIG. 1 is a schematic diagram of a network architecture applicable to a technical solution of this application;
FIG. 2 is a schematic diagram of a communication method 200 according to this application;
FIG. 3 is a schematic diagram of a communication method 300 according to this application;
FIG. 4A and FIG. 4B are an example of a communication method according to this application;
FIG. 5A and FIG. 5B are another example of a communication method according to this application;
FIG. 6A and FIG. 6B are another example of a communication method according to this application;
FIG. 7 is another example of a communication method according to this application;
FIG. 8 is a schematic diagram of a structure of an apparatus according to an embodiment of this application; and
FIG. 9 is a schematic diagram of another structure of an apparatus according to an embodiment of this application.

### DESCRIPTION OF EMBODIMENTS

The following describes technical solutions of this application with reference to the accompanying drawings.

The technical solutions provided in this application may be applied to various communication systems, for example, a 5^{th} generation (5^{th} generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6^{th} generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

First, a network architecture applicable to this application is briefly described.

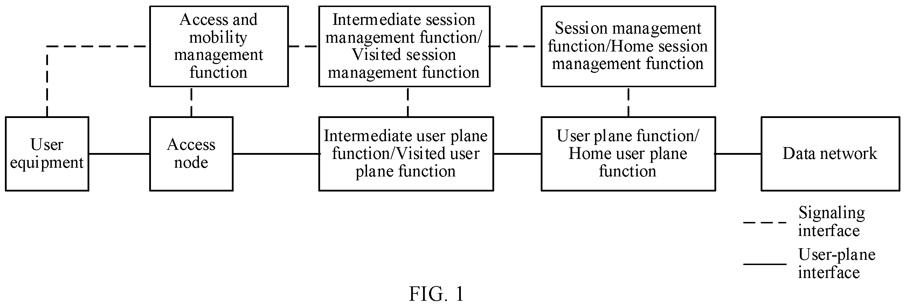

For example, FIG. 1 is a schematic diagram of a network architecture.

As shown in FIG. 1, the network architecture includes user equipment, an access node, an access and mobility management function, an intermediate session management function/a visited session management function, a session management function/a home session management function, an intermediate user plane function/a visited user plane function, a user plane function/a home user plane function and an application function, and a data network (data network, DN) connected to an operator network. The user equipment may send service data to the data network by using the access node and the user plane function, and receive the service data from the data network.

The following briefly describes functions or network elements used in FIG. 1.

### 1. User equipment

User equipment (user equipment, UE) mainly accesses a network and obtains a service through a wireless air interface. For example, the user equipment accesses a wireless network by using an access node at a current location.

The user equipment in embodiments of this application may also be referred to as a terminal device, a user, an access terminal, a subscriber unit, a subscriber station, a mobile station, a remote station, a remote terminal, a mobile device, a user terminal, a terminal, a wireless communication device, a user agent, a user apparatus, or the like. The user equipment may be a cellular phone, a smartwatch, a wireless data card, a mobile phone, a tablet computer, a personal digital assistant (personal digital assistant, PDA) computer, a wireless modem, a handheld device, a laptop computer, a machine type communication (machine type communication, MTC) terminal, a computer with a wireless transceiver function, an internet of things terminal, a virtual reality terminal device, an augmented reality terminal device, a wearable device, a vehicle, a terminal in device-to-device (device-to-device, D2D) communication, a terminal in vehicle-to-everything (vehicle-to-everything, V2X) communication, a terminal in machine type communication (machine type communication, MTC), a terminal in an internet of things (internet of things, IOT), a terminal in a smart office, a terminal in industrial control, a terminal in self driving, a terminal in remote surgery, a terminal in a smart grid, a terminal in transportation security, a terminal in a smart city, a terminal in a smart home, or a terminal (for example, a satellite phone or a satellite terminal) in satellite communication. The user equipment may alternatively be customer-premises equipment (customer-premises equipment, CPE), a telephone, a router, a network switch, a residential gateway (residential gateway, RG), a set-top box, a fixed-mobile convergence product, a home network adapter, or an internet access gateway.

A specific technology and a specific device form that are used for the user equipment are not limited in embodiments of this application.

### 2. Access node

An access node may provide a function of accessing a communication network for an authorized user in a specified area, and may specifically include a wireless network device in a 3rd generation partnership project (3rd generation partnership project, 3GPP) network, or may include an access node in a non-3GPP (non-3GPP) network.

The access node may use different radio access technologies. Currently, there are two types of radio access technologies: a 3GPP access technology and a non-3GPP (non-3GPP) access technology. The 3GPP access technology is an access technology that complies with a 3GPP standard specification, for example, a radio access technology used in a 3rd generation (3rd generation, 3G), 4th generation (4th generation, 4G), or 5G system. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), and code division multiple access (code division multiple access, CDMA). The access node may allow interconnection between the user equipment and a 3GPP core network by using the non-3GPP technology.

For example, the access node may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a base station (base station, BS) in WiMAX, a radio relay node, a radio backhaul node, and a transmission point (transmission point, TP) or a transmission reception point (transmission and reception point, TRP); or may be a next-generation node base station (next generation node base station, gNB) or a transmission point (TRP or TP) in a 5G (for example, NR) system, or one or a group of (including a plurality of antenna panels) antenna panels of a base station in a 5G system; or may be a network node that forms a gNB or a transmission pint, for example, a distributed unit (distributed unit, DU), or a base station in a next-generation communication 6G system.

A specific technology and a specific device form that are used for the access node are not limited in embodiments of this application.

### 3. Access and mobility management function

An access and mobility management function is mainly used for attachment, mobility management, a tracking area update procedure, and the like of user equipment in a mobile network. In a 5G system, the access and mobility management function may be an AMF (access and mobility management function). In a future communication system (for example, a 6G system), the access and mobility management function may still be an AMF, or may have another name. This is not limited in this application.

### 4. Session management function

A session management function is mainly used for session management in a mobile network, for example, session establishment, modification, and release. Specific functions include, for example, allocating an internet protocol address to user equipment, and selecting a user plane function/home user plane function that provides a packet forwarding function.

In a non-roaming or local roaming (local breakout, LBO) case, the session management function is used. In a home roaming (home routed, HR) case, a home session management function is used. In a 5G system, the session management function may be an SMF (session management function) or an H-SMF (home session management function). In a future communication system (for example, a 6G system), the session management function may still be an SMF or an H-SMF, or may have another name. This is not limited in this application.

In this application, the session management function and the home session management function are uniformly referred to as session management functions.

### 5. Intermediate session management function

An intermediate session management function is used to select an intermediate user plane function, and communicate with a session management function in a non-roaming or local roaming case. In a 5G system, the intermediate session management function may be an I-SMF (intermediate session management function). In a future communication system (for example, a 6G system), the intermediate session management function may still be an I-SMF, or may have another name. This is not limited in this application.

It can be noted that the I-SMF is an optional network device. To be specific, an operator may choose not to deploy the intermediate session management function, and an access and mobility management function directly communicates with the session management function.

### 6. Visited session management function

A visited session management function is used to select a visited user plane function, and communicate with a home session management function and the like in a home roaming case. In this case, the visited session management function belongs to a visited location, and the home session management function belongs to a home location of user equipment. In a 5G system, the visited session management function may be a V-SMF (visited session management function). In a future communication system (for example, a 6G system), the visited session management function may still be a V-SMF, or may have another name. This is not limited in this application.

### 7. User plane function/Home user plane function

A user plane function is mainly used for processing a user packet, for example, forwarding, charging, or lawful interception.

In a non-roaming or local roaming case, the user plane function is used. In a home roaming case, a home user plane function is used. In a 5G system, the user plane function may be a UPF (user plane function) or an H-UPF (home user plane function). In a future communication system (for example, a 6G system), the user plane function may still be a UPF or an H-UPF, or may have another name. This is not limited in this application.

### 8. Intermediate user plane function

An intermediate user plane function is used to forward a service data packet of user equipment and the like between the intermediate user plane function and the user plane function in a non-roaming or local roaming case. In a 5G system, the intermediate user plane function may be an I-UPF (intermediate user plane function). In a future communication system (for example, a 6G system), the intermediate user plane function may still be an I-UPF, or may have another name. This is not limited in this application.

It can be noted that the intermediate user plane function is an optional network device. To be specific, an operator may choose not to deploy the intermediate user plane function, and an access node directly forwards the service data packet of the user equipment with the user plane function.

### 9. Visited user plane function

A visited user plane function is used to forward a service data packet of user equipment and the like between the visited user plane function and a user plane function in a home roaming case. In a 5G system, the visited user plane function may be a V-UPF (visited user plane function, V-UPF). In a future communication system (for example, a 6G system), the visited user plane function may still be a V-UPF, or may have another name. This is not limited in this application.

### 10. Data network

A data network is mainly used to provide a data transmission service for user equipment. The data network may be a private network, for example, a local area network, may be a public data network (public data network, PDN), for example, the Internet (Internet), or may be a dedicated network jointly deployed by operators, for example, a dedicated network deployed to configure an IP multimedia network subsystem (IP multimedia core network subsystem, IMS) service.

In the network architecture shown in FIG. 1, the network elements may communicate with each other through an interface. The interface between the network elements may be a point-to-point interface, or may be a service-based interface. This is not limited in this application.

It should be understood that the network architecture shown above is merely an example for description, and a network architecture applicable to embodiments of this application is not limited thereto. Any network architecture that can implement functions of the foregoing network elements is applicable to embodiments of this application. For example, the network architecture shown in FIG. 1 may include fewer or more network elements or functions. For example, the network architecture shown in FIG. 1 may further include a network repository function (network repository function, NRF).

It should be further understood that the functions or the network elements shown in FIG. 1 may be understood as network elements configured to implement different functions, for example, may be combined into a network slice based on a requirement. These network elements may be independent devices, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in the 6G system and another future network. For example, in a 6G system, some or all of the foregoing network elements may still use terms in the 5G system, or may use other names.

For ease of understanding embodiments of this application, terms or technologies used in this application are briefly described.

### 1. Non-roaming networking and roaming networking

A 5G system supports roaming networking and non-roaming networking.

The non-roaming networking means that network devices in a same operator or a same communication network (for example, a public land mobile network (public land mobile network, PLMN)) are interconnected. An interface for the interconnection is uniformly referred to as an intra-network interface. In this application, the interconnection within the same operator or the same communication network is referred to as "intra-communication network communication".

The roaming networking means that network devices between two operators or two communication networks (such as PLMNs) are interconnected. An interface for the interconnection is uniformly referred to as an inter-network interface. In this application, the interconnection between different operators or different communication networks is referred to as "inter-communication network communication".

Usually, to ensure security of a communication system, when supporting both the roaming networking and the non-roaming networking, the network device isolates the inter-network interface from the intra-network interface, that is, the network device provides different internet protocol (internet protocol, IP) addresses or fully qualified domain names (fully qualified domain names, FQDNs) for the inter-network interface and the intra-network interface. Optionally, a security proxy may be further deployed between the network devices that communicate with each other through the inter-network interface, and the network devices need to be interconnected by using the security proxy, to ensure network security in the roaming networking.

For ease of description, in the following, for the network device, an IP address or an FQDN for the inter-network interface is referred to as an inter-network IP address or an inter-network FQDN, and for the network device, an IP address or an FQDN for the intra-network interface is referred to as an intra-network IP address or an intra-network FQDN.

### 2. Security proxy

Communication networks between different operators are not directly connected to each other. To protect security of the respective communication network, the operator uses a key security network element, namely, a security proxy, to connect to a communication network of another operator.

The security proxy is used to interconnect with the communication network of the another operator, is responsible for message filtering and policy management on a control plane interface between the operators, and mainly functions as a border gateway between control planes of a core network of an operator. Security functions of the security proxy include message filtering, access control, topology hiding, and error detection and processing.

In 5G, the security proxy may be a security edge protection proxy (security edge protection proxy, SEPP).

The security proxy may also be referred to as a security proxy device, and is uniformly referred to as a security proxy device below.

### 3. Non-roaming, local roaming, and home roaming

Non-roaming means that user equipment performs accessing and transmits a service through a home communication network. The home communication network herein may be a communication network with which the user equipment registers, may also be referred to as a home communication network, a home network, or the like, and is uniformly referred to as a home network below.

Roaming means that the user equipment performs accessing and transmits a service through a visited communication network. The visited communication network may be a communication network in a visited location of the user equipment, may also be referred to as a visited communication network, a visited network, or the like, and is uniformly referred to as a visited network below.

The roaming includes both local roaming and home roaming.

The local roaming means that a session management function and all user plane functions used in a session are all within the visited network. The local roaming may also be referred to as local breakout (local breakout, LBO).

The home roaming means that a session is established by a session management function in the home network and the session management function in the visited network, and the session management functions in the home network and the visited network select respective user plane functions. Service data packets of the user equipment and a data network are forwarded by using an access node in the visited network, the user plane function in the visited network, and the user plane function in the home network. The home roaming may also be referred to as home routed (home routed, HR).

In an actual case, the user equipment may move between a current communication network and another communication network when service continuity is ensured. The current communication network herein may be a home network, or may be a visited network. The another communication network may be a visited network, or may be a home network.

For example, a same country supports a plurality of operators, and networks of the operators are deployed in different areas. User equipment of an operator A performs accessing through a network of the operator A in an area 1, and performs accessing through a network of an operator B after moving to an area 2.

For another example, an operator of a 5G system in a country A is an operator A, and an operator of a 5G system in a country B is an operator B. User equipment of the operator A performs accessing through a network of the operator B in the country B, and performs accessing through a network of the operator A after moving to the country A.

The foregoing briefly describes terms used in this application, and details are not described in the following embodiments again.

Currently, network devices, for example, a session management function and an access and mobility management function, cannot distinguish whether communication with another network device is intra-communication network communication or inter-communication network communication. This may cause a failure in the communication between the network devices. For example, the network device cannot communicate with a network device in another communication network by using an intra-network IP address. For another example, the network device cannot communicate with a network device in a current communication network by using an inter-network IP address.

To resolve the foregoing problem, this application provides a communication method and a communication apparatus, so that a network device can distinguish between intra-communication network communication and inter-communication network communication, thereby ensuring normal communication between network devices.

For ease of understanding embodiments of this application, before embodiments of this application are described, the following descriptions are first provided.

First, in this application, different communication networks may be understood as different operators of the communication networks. The communication network may be a PLMN, or may be another communication network. This is not limited in this application.

Second, in this application, "indicating" or "indication" may include "directly indicating" and "indirectly indicating", or "indicating" or "indication" may be explicitly and/or implicitly indicated. For example, when a piece of information is described as indicating information I, the information may directly indicate I or indirectly indicate I, but it does not necessarily indicate that the information carries I. For another example, "implicitly indicating" may be performed based on a location and/or a resource used for transmission; and "explicitly indicating" may be performed based on one or more parameters, and/or one or more indices, and/or one or more indicated bit patterns.

Third, definitions of many characteristics (for example, roaming and non-roaming) listed in this application are merely used to explain functions of the characteristics by using examples. For detailed content of the characteristics, refer to a conventional technology.

Fourth, "first", "second", "third", and "fourth", and various sequence numbers in the following embodiments are merely used for differentiation for ease of description, and are not used to limit the scope of embodiments of this application. For example, different fields, different information, and different messages are distinguished from each other.

Fifth, "predefinition" may be implemented by prestoring corresponding code or a table in a device (for example, including a network device), or may be implemented in another manner that may indicate related information. A specific implementation of "predefinition" is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Sixth, a "protocol" used in embodiments of this application may refer to a standard protocol in the communication field. For example, the "protocol" may include an LTE protocol, an NR protocol, and a related protocol applied to a future communication system. This is not limited in this application.

Seventh, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

The following describes in detail a communication method provided in embodiments of this application with reference to the accompanying drawings. Embodiments of this application may be applied to the network architecture shown in FIG. 1, but this is not limited.

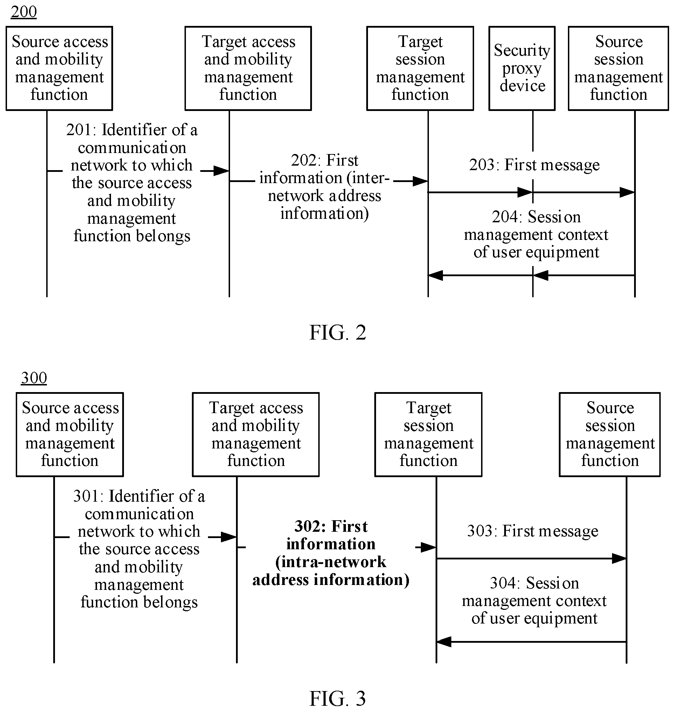

FIG. 2 is a schematic diagram of a communication method 200 according to this application.

The method 200 may be applied to a scenario in which user equipment moves from a source communication network to a target communication network. In this scenario, the user equipment moves from a source access and mobility management function and a source session management function to a target access and mobility management function and a target session management function.

The source communication network may be a home network of the user equipment, and the target network may be a visited network of the user equipment. In this case, a communication network to which the source access and mobility management function and the source session management function belong is the home network of the user equipment, and a communication network to which the target access and mobility management function and the target session management function belong is the visited network of the user equipment. In other words, the source access and mobility management function is a home access and mobility management function, the source session management function is a home session management function, the target access and mobility management function is a visited access and mobility management function, and the target session management function is a visited session management function.

The source communication network may alternatively be a visited network of the user equipment, and the target network may be a home network of the user equipment. In this case, a communication network to which the source access and mobility management function and the source session management function belong is the visited network of the user equipment, and a communication network to which the target access and mobility management function and the target session management function belong is the home network of the user equipment. In other words, the source access and mobility management function is a visited access and mobility management function, the source session management function is a visited session management function, the target access and mobility management function is a home access and mobility management function, and the target session management function is a home session management function.

The source communication network may alternatively be a first visited network of the user equipment, and the target network may alternatively be a second visited network of the user equipment. In this case, a communication network to which the source access and mobility management function and the source session management function belong is the first visited network of the user equipment, and a communication network to which the target access and mobility management function and the target session management function belong is the second visited network of the user equipment. The first visited network is different from the second visited network. In other words, the source access and mobility management function and the target access and mobility management function are different visited access and mobility management functions, and the source session management function and the target session management function are different visited session management functions.

The method 200 may include at least part of the following content.

Step 201: The source access and mobility management function obtains an identifier of a communication network to which the source access and mobility management function belongs, and sends the identifier to the target access and mobility management function.

Correspondingly, the target access and mobility management function receives, from the source access and mobility management function, the identifier of the communication network to which the source access and mobility management function belongs.

It may be understood that the identifier of the communication network to which the source access and mobility management function belongs is an identifier of the source communication network, for example, a PLMN ID of the source communication network.

Optionally, the identifier of the communication network to which the source access and mobility management function belongs is preconfigured or predefined in the source access and mobility management function.

In a possible implementation, the identifier of the communication network to which the source access and mobility management function belongs is carried in a URI of a second message. For example, the identifier of the communication network to which the source access and mobility management function belongs is carried in a 5G globally unique temporary identifier (5G globally unique temporary identifier, 5G GUTI) of the URI of the second message.

In another possible implementation, the source access and mobility management function includes, in a message body of a second message by using an information element, the identifier of the communication network to which the source access and mobility management function belongs.

The second message is a message sent by the source access and mobility management function to the target access and mobility management function. For example, the second message may be a handover request message.

Step 202: When the target access and mobility management function determines, based on the identifier of the communication network to which the source access and mobility management function belongs, that a communication network to which the user equipment belongs changes, the target access and mobility management function sends first information to the target session management function of the user equipment.

In another description manner, the target access and mobility management function determines, based on the identifier of the communication network to which the source access and mobility management function belongs, that a communication network to which the user equipment belongs changes, and then sends first information to the target session management function of the user equipment.

Correspondingly, the target session management function receives the first information from the target access and mobility management function.

The first information includes inter-network address information of the source session management function.

In other words, when the communication network to which the user equipment belongs changes, the target access and mobility management function provides the inter-network address information of the source session management function for the target session management function, so that the target session management function obtains a session management context from the source session management function by using the inter-network address information of the source session management function.

In a possible implementation, the first information is carried in a first URI of the session management context of the source session management function. For example, the first information is carried in an {apiroot} part of the first URI of the session management context of the source session management function.

Specifically, the method 200 further includes: The source access and mobility management function sends a third URI of the session management context of the source session management function to the target access and mobility management function, where the third URI includes intra-network address information of the session management function. That the target access and mobility management function sends first information to the target session management function of the user equipment includes: The target access and mobility management function replaces the intra-network address information of the session management function in the third URI with the inter-network address information of the session management function, to obtain the first URI of the session management context of the source session management function. The target access and mobility management function sends the first URI to the target session management function.

The inter-network address information may include an inter-network FQDN and/or an inter-network IP address. For example, when the FQDN is used for inter-communication network communication, and the IP address is used for intra-communication network communication, the inter-network address information may include the inter-network FQDN. For another example, when the IP address is used for inter-communication network communication, and the FQDN is used for intra-communication network communication, the inter-network address information may include the inter-network IP address.

The intra-network address information may include an intra-network FQDN and/or an intra-network IP address. The inter-network address information may include an inter-network FQDN and/or an inter-network IP address.

For example, when the FQDN is used for inter-communication network communication, and the IP address is used for intra-communication network communication, the first information may include the inter-network FQDN.

For another example, when the IP address is used for inter-communication network communication, and the FQDN is used for intra-communication network communication, the first information may include the inter-network IP address.

In a possible implementation, that the target access and mobility management function determines, based on the identifier of the communication network to which the source access and mobility management function belongs, that a communication network to which the user equipment belongs changes includes: When the identifier of the communication network to which the source access and mobility management function belongs is different from an identifier of the communication network to which the target access and mobility management function belongs, the target access and mobility management function determines that the communication network to which the user equipment belongs changes. In another description manner, that the target access and mobility management function determines, based on the identifier of the communication network to which the source access and mobility management function belongs, that a communication network to which the user equipment belongs changes includes: The target access and mobility management function determines that the identifier of the communication network to which the source access and mobility management function belongs is different from an identifier of the communication network to which the target access and mobility management function belongs, to determine that the communication network to which the user equipment belongs changes.

The identifier of the communication network to which the target access and mobility management function belongs may be preconfigured or predefined in the target access and mobility management function.

In a possible implementation, the method 200 further includes: The target access and mobility management function receives an identifier of the source session management function from the source access and mobility management function. The target access and mobility management function obtains inter-network address information of the source session management function locally or from a network repository function based on the identifier of the source session management function.

For example, the target access and mobility management function receives the identifier of the source session management function from the source access and mobility management function. The target access and mobility management function obtains registration information of the source session management function locally or from the network repository function based on the identifier of the source session management function, where the registration information includes the inter-network address information of the source session management function.

In a possible implementation, the first information further includes the identifier of the communication network to which the source access and mobility management function belongs, so that the target session management function determines, based on the identifier of the communication network to which the source access and mobility management function belongs, that the communication network to which the user equipment belongs changes.

Step 203: When the target session management function determines, based on the first information, that the communication network to which the user equipment belongs changes, the target session management function sends a first message to the source session management function by using a security proxy device.

In another description manner, the target session management function determines, based on the first information, that the communication network to which the user equipment belongs changes, and then sends a first message to the source session management function by using a security proxy device.

Correspondingly, the source session management function receives the first message from the target session management function by using the security proxy device.

The first information includes the identifier of the communication network to which the source session management function belongs and/or address information of the source session management function. The first message is used to obtain a session management context of the user equipment.

There are many implementations in which the target session management function determines, based on the first information, that the communication network to which the user equipment belongs changes. This is not limited in this application.

In a possible implementation, the first information includes the identifier of the communication network to which the source session management function belongs, for example, the PLMN ID to which the source session management function belongs. That the target session management function determines, based on the first information, that the communication network to which the user equipment belongs changes includes: When the identifier of the communication network to which the source session management function belongs is different from an identifier of the communication network to which the target session management function belongs, the target session management function determines that the communication network to which the user equipment belongs changes. In another description manner, that the target session management function determines, based on the identifier of the communication network to which the source session management function belongs, that a communication network to which the user equipment belongs changes includes: The target session management function determines that the identifier of the communication network to which the source session management function belongs is different from an identifier of the communication network to which the target session management function belongs, to determine that the communication network to which the user equipment belongs changes.

The identifier of the communication network to which the target session management function belongs may be preconfigured or predefined in the target session management function.

In addition, in some other embodiments of this application, the target session management function may alternatively determine, depending on whether the identifier of the communication network to which the source session management function belongs is received, that the communication network to which the user equipment belongs does not change. For example, the target session management function receives the identifier of the communication network to which the source session management function belongs, to determine that the communication network to which the user equipment belongs changes.

In still another possible implementation, the first information includes the address information of the source session management function. That the target session management function determines, based on the first information, that the communication network to which the user equipment belongs changes includes: When the address information of the source session management function is the inter-network address information of the source session management function, the target session management function determines that the communication network to which the user equipment belongs changes. In another description manner, that the target session management function determines, based on the address information of the source session management function, that a communication network to which the user equipment belongs changes includes: The target session management function determines that the address information of the source session management function is the inter-network address information of the source session management function, to determine that the communication network to which the user equipment belongs changes.

In yet another possible implementation, the first information includes the address information of the source session management function and the identifier of the communication network to which the source session management function belongs. That the target session management function determines, based on the first information, that the communication network to which the user equipment belongs changes includes: When the address information of the source session management function is inter-network address information of the source session management function, and/or the identifier of the communication network to which the source session management function belongs is different from an identifier of the communication network to which the target session management function belongs, the target session management function determines that the communication network to which the user equipment belongs changes. In another description manner, that the target session management function determines, based on the first information, that the communication network to which the user equipment belongs changes includes: The target session management function determines that the address information of the source session management function is the inter-network address information of the source session management function, and/or the identifier of the communication network to which the source session management function belongs is different from an identifier of the communication network to which the target session management function belongs, to determine that the communication network to which the user equipment belongs changes.

Certainly, when the first information includes the address information of the source session management function and the identifier of the communication network to which the source session management function belongs, the target session management function may alternatively determine only whether the address information of the source session management function is the inter-network address information of the source session management function, or determine only whether the identifier of the communication network to which the source session management function belongs is the same as the identifier of the communication network to which the target session management function belongs. This is not limited in this application.

Optionally, the inter-network address information of the source session management function includes an inter-network FQDN of the source session management function and/or an inter-network IP address of the source session management function.

For example, when the FQDN is used for inter-communication network communication, and the IP address is used for intra-communication network communication, the inter-network address information of the source session management function includes the inter-network FQDN of the source session management function.

For another example, when the IP address is used for inter-communication network communication, and the FQDN is used for intra-communication network communication, the inter-network address information of the source session management function includes the inter-network IP address of the source session management function.

In this application, that the target session management function sends a first message to the source session management function by using a security proxy device may be understood as that the target session management function sends the first message to the security proxy device, and the security proxy device then forwards the first message to the source session management function. There are many implementations in which the target session management function sends a first message to the source session management function by using a security proxy device. This is not limited in this application.

In a possible implementation, the method 200 further includes: The target session management function receives a first URI from the target access and mobility management function, where the first URI is the URI of the session management context of the source session management function; and an FQDN in the first URI is the FQDN of the source session management function, and/or an IP address in the first URI is the IP address of the source session management function. That the target session management function sends a first message to the source session management function by using a security proxy device includes: The target session management function determines a second URI based on the first URI; and sends the first message to the security proxy device based on the second URI. The second URI includes an FQDN of the security proxy device and/or an IP address of the security proxy device, and the first message includes the FQDN of the source session management function and/or the IP address of the source session management function.

Optionally, the second URI is a URI of the first message. It may be understood that the target session management function constructs the URI of the first message based on the received first URI, and sends the first message.

Optionally, an FQDN in the second URI is the FQDN of the security proxy device, and/or an IP address in the second URI is the IP address of the security proxy device. Alternatively, an FQDN in the second URI is a telescopic FQDN (telescopic FQDN), and the telescopic FQDN includes the FQDN of the security proxy device.

For example, the target session management function receives a first URI from the target access and mobility management function, where an FQDN in the first URI is the FQDN of the source session management function; and the target session management function constructs a second URI of the first message based on the first URI, where an FQDN in the second URI is an FQDN of the security proxy device, and information in the first URI (for example, the FQDN of the source session management function) is carried in a 3gpp-Sbi-target-apiroot packet header.

For another example, the target session management function receives a first URI from the target access and mobility management function, where an FQDN in the first URI is the FQDN of the source session management function; and the target session management function constructs a second URI of the first message based on the first URI, and the second URI includes a telescopic FQDN including an FQDN of the security proxy device and the FQDN of the source session management function.

For another example, the target session management function receives a first URI from the target access and mobility management function, where an IP address in the first URI is the IP address of the source session management function; and the target session management function constructs a second URI of the first message based on the first URI, where an IP address in the second URI is an IP address of the security proxy device, and information in the first URI (for example, the IP address of the source session management function) is carried in a 3gpp-Sbi-target-apiroot packet header.

The FQDN of the source session management function and/or the IP address of the source session management function herein are/is used by the security proxy device to send the first message to the source session management function. For example, after receiving the first message, the security proxy device modifies the URI of the first message based on the FQDN of the source session management function and/or the IP address of the source session management function, and replaces the FQDN and/or the IP address in the URI of the first message with the FQDN of the source session management function and/or the IP address of the source session management function, to send the first message to the source session management function.

Optionally, the first message includes third information. The third information indicates that the target session management function is the visited session management function or an intermediate session management function. Alternatively, the third information indicates the communication network to which the target session management function belongs. For example, the third information includes the identifier of the communication network to which the target session management function belongs.

For example, the communication network to which the source session management function belongs is the home network of the user equipment, and the first message further includes the third information. In another description manner, the target session management function determines that the communication network to which the source session management function belongs is the home network of the user equipment, and the target session management function includes the third information in the first message. In still another description manner, if the communication network to which the source session management function belongs is the home network of the user equipment, the target session management function includes the third information in the first message.

Step 204: The source session management function sends the session management context of the user equipment to the target session management function based on the first message by using the security proxy device.

In the method 200, the source session management function receives the first message from the security proxy device. Therefore, the source session management function sends the session management context of the user equipment to the security proxy device, and the security proxy device then forwards the session management context of the user equipment to the target session management function.

Optionally, the first message includes third information. In this case, the source session management function sends the session management context of the user equipment to the target session management function based on the third information by using the security proxy device.

For example, when the third information in the first message indicates that the target session management function is the visited session management function, the source session management function sends a roaming session management context of the user equipment to the target session management function by using the security proxy device.

For another example, when the third information in the first message indicates the communication network to which the target session management function belongs, and the communication network to which the target session management function belongs is different from the communication network to which the source session management function belongs, the source session management function sends a roaming session management context of the user equipment to the target session management function by using the security proxy device.

The roaming session management context may be a home session management context, and may specifically include at least one of the following information: a URI of a home session management function (hSmfUri), a home network slice identifier (hplmnSnssai), a home session management function instance identifier (hSmflnstanceId), or a home session management function service instance identifier (hSmfServiceInstanceId).

In this way, in the method 200, the target access and mobility management function and the target session management function may distinguish between the intra-communication network communication (where the communication network to which the user equipment belongs does not change) and the inter-communication network communication (where the communication network to which the user equipment belongs changes), to ensure normal communication between the network devices (for example, between the target session management function and the source session management function).

FIG. 3 is a schematic diagram of a communication method 300 according to this application.

The method 300 may be applied to a scenario in which user equipment moves in a same communication network. That is, a source communication network and a target communication network are a same communication network. In this scenario, the user equipment moves from a source access and mobility management function and a source session management function to a target access and mobility management function and a target session management function.

The source communication network and the target communication network may be a visited network of the user equipment. In other words, the source access and mobility management function and the target access and mobility management function are different visited access and mobility management functions in a same visited network of the user equipment, and the source session management function and the target session management function are different visited session management functions in the same visited network of the user equipment.

Certainly, the source communication network and the target communication network may be a home network of the user equipment. In this case, the target session management function may be an intermediate session management function.

The method 300 may include at least part of the following content.

Step 301: The source access and mobility management function sends, to the target access and mobility management function, an identifier of a communication network to which the source access and mobility management function belongs.

Correspondingly, the target access and mobility management function receives, from the source access and mobility management function, the identifier of the communication network to which the source access and mobility management function belongs.

For detailed descriptions of step 301, refer to step 201. Details are not described herein again.

Step 302: When the target access and mobility management function determines, based on the identifier of the communication network to which the source access and mobility management function belongs, that a communication network to which the user equipment belongs does not change, the target access and mobility management function sends first information to the target session management function of the user equipment.

In another description manner, the target access and mobility management function determines, based on the identifier of the communication network to which the source access and mobility management function belongs, that a communication network to which the user equipment belongs does not change, and then sends first information to the target session management function of the user equipment.

Correspondingly, the target session management function receives the first information from the target access and mobility management function.

The first information includes intra-network address information of the source session management function.

In other words, when the communication network to which the user equipment belongs does not change, the target access and mobility management function provides the intra-network address information of the source session management function for the target session management function, so that the target session management function obtains a session management context from the source session management function by using the intra-network address information of the source session management function.

In a possible implementation, the first information is carried in a first URI of the session management context of the source session management function. For example, the first information is carried in an {apiroot} part of the first URI of the session management context of the source session management function.

The intra-network address information may include an intra-network FQDN and/or an intra-network IP address. For example, when the FQDN is used for inter-communication network communication, and the IP address is used for intra-communication network communication, the intra-network address information may include the intra-network IP address. For another example, when the IP address is used for inter-communication network communication, and the FQDN is used for intra-communication network communication, the intra-network address information may include the intra-network FQDN.

In a possible implementation, that the target access and mobility management function determines, based on the identifier of the communication network to which the source access and mobility management function belongs, that a communication network to which the user equipment belongs does not change includes: When the identifier of the communication network to which the source access and mobility management function belongs is the same as an identifier of a communication network to which the target access and mobility management function belongs, the target access and mobility management function determines that the communication network to which the user equipment belongs does not change. The identifier of the communication network to which the target access and mobility management function belongs may be preconfigured or predefined in the target access and mobility management function.

In another description manner, that the target access and mobility management function determines, based on the identifier of the communication network to which the source access and mobility management function belongs, that a communication network to which the user equipment belongs does not change includes: The target access and mobility management function determines that the identifier of the communication network to which the source access and mobility management function belongs is the same as an identifier of a communication network to which the target access and mobility management function belongs, to determine that the communication network to which the user equipment belongs does not change.

In a possible implementation, the first information further includes the identifier of the communication network to which the source access and mobility management function belongs, so that the target session management function determines, based on the identifier of the communication network to which the source access and mobility management function belongs, that the communication network to which the user equipment belongs does not change.

Step 303: When the target session management function determines, based on the first information, that the communication network to which the user equipment belongs does not change, the target session management function sends a first message to the source session management function without using a security proxy device.

In another description manner, the target session management function determines, based on the first information, that the communication network to which the user equipment belongs does not change, and then sends a first message to the source session management function without using a security proxy device.

Correspondingly, the source session management function receives the first message from the target session management function without using the security proxy device.

The first information includes the identifier of the communication network to which the source session management function belongs and/or address information of the source session management function. The first message is used to obtain a session management context of the user equipment.

There are many implementations in which the target session management function determines, based on the first information, that the communication network to which the user equipment belongs does not change. This is not limited in this application.

In a possible implementation, the first information includes the identifier of the communication network to which the source session management function belongs, for example, a PLMN ID to which the source session management function belongs. That the target session management function determines, based on the first information, that the communication network to which the user equipment belongs does not change includes: When the identifier of the communication network to which the source session management function belongs is the same as an identifier of a communication network to which the target session management function belongs, the target session management function determines that the communication network to which the user equipment belongs does not change. The identifier of the communication network to which the target session management function belongs may be preconfigured or predefined in the target session management function. In another description manner, that the target session management function determines, based on the first information, that the communication network to which the user equipment belongs does not change includes: The target session management function determines that the identifier of the communication network to which the source session management function belongs is the same as an identifier of a communication network to which the target session management function belongs, to determine that the communication network to which the user equipment belongs does not change.

In addition, in some other embodiments of this application, the target access and mobility management function may alternatively implicitly indicate, by not sending, to the target session management function, the identifier of the communication network to which the source session management function belongs, that the communication network to which the user equipment belongs does not change.

In another possible implementation, the first information includes the address information of the source session management function. That the target session management function determines, based on the first information, that the communication network to which the user equipment belongs does not change includes: When the address information of the source session management function is the intra-network address information of the source session management function, the target session management function determines that the communication network to which the user equipment belongs does not change. In another description manner, that the target session management function determines, based on the first information, that the communication network to which the user equipment belongs does not change includes: The target session management function determines that the address information of the source session management function is the intra-network address information of the source session management function, to determine that the communication network to which the user equipment belongs does not change.

In still another possible implementation, the first information includes the address information of the source session management function and the identifier of the communication network to which the source session management function belongs. That the target session management function determines, based on the first information, that the communication network to which the user equipment belongs changes includes: When the address information of the source session management function is the intra-network address information of the source session management function, and the identifier of the communication network to which the source session management function belongs is the same as an identifier of a communication network to which the target session management function belongs, the target session management function determines that the communication network to which the user equipment belongs does not change. In another description manner, that the target session management function determines, based on the first information, that the communication network to which the user equipment belongs does not change includes: The target session management function determines that the address information of the source session management function is the intra-network address information of the source session management function, and the identifier of the communication network to which the source session management function belongs is the same as an identifier of a communication network to which the target session management function belongs, to determine that the communication network to which the user equipment belongs does not change.

Certainly, when the first information includes the address information of the source session management function and the identifier of the communication network to which the source session management function belongs, the target session management function may alternatively determine only whether the address information of the source session management function is the inter-network address information of the source session management function, or determine only whether the identifier of the communication network to which the source session management function belongs is the same as the identifier of the communication network to which the target session management function belongs. This is not limited in this application.

Optionally, the intra-network address information of the source session management function includes an intra-network FQDN of the source session management function and/or an intra-network IP address of the source session management function.

For example, when the FQDN is used for inter-communication network communication, and the IP address is used for intra-communication network communication, the intra-network address information of the source session management function includes the intra-network IP address of the source session management function.

For another example, when the IP address is used for inter-communication network communication, and the FQDN is used for intra-communication network communication, the intra-network address information of the source session management function includes the intra-network FQDN of the source session management function.

In this application, that the target session management function sends a first message to the source session management function without using a security proxy device may be understood as that when the target session management function sends the first message to the source session management function, the first message is not forwarded by using the security proxy device.

Optionally, the first message further includes third information. The third information indicates that the target session management function is the visited session management function or the intermediate session management function. Alternatively, the third information indicates the communication network to which the target session management function belongs. For example, the third information includes the identifier of the communication network to which the target session management function belongs.

For example, the communication network to which the source session management function belongs is the home network of the user equipment, and the first message further includes the third information. In another description manner, the target session management function determines that the communication network to which the source session management function belongs is the home network of the user equipment, and the target session management function includes the third information in the first message. In still another description manner, if the communication network to which the source session management function belongs is the home network of the user equipment, the target session management function includes the third information in the first message.

Step 304: The source session management function sends the session management context of the user equipment to the target session management function based on the first message.

In the method 300, the source session management function receives the first message from the target session management function. Therefore, the source session management function directly sends the session management context of the user equipment to the target session management function, without being forwarded by using the security proxy device.

Optionally, the first message includes third information. In this case, the source session management function sends the session management context of the user equipment to the target session management function based on the third information.

For another example, when the third information in the first message indicates that the target session management function is the intermediate session management function, the source session management function sends a non-roaming session management context of the user equipment to the target session management function.

For another example, when the third information in the first message indicates the communication network to which the target session management function belongs, and the communication network to which the target session management function belongs is the same as the communication network to which the source session management function belongs, the source session management function sends a non-roaming session management context of the user equipment to the target session management function.

The non-roaming session management context may be a session management context, and may specifically include at least one of the following information: a URI of a session management function (SmfUri), a session management function instance identifier (SmflnstanceId), or a session management function service instance identifier (SmfServiceInstanceId).

In this way, in the method 300, the target access and mobility management function and the target session management function may distinguish between the intra-communication network communication (where the communication network to which the user equipment belongs does not change) and the inter-communication network communication (where the communication network to which the user equipment belongs changes), to ensure normal communication between network devices (for example, between the target session management function and the source session management function).

It can be noted that the method 200 and the method 300 are applied to various procedures triggered by movement of user equipment, for example, an N2 handover procedure, a registration update procedure, and a service request procedure of the user equipment.

The following describes the technical solutions of this application with reference to a specific example. In the following example, a communication network PLMN and an N2 handover procedure are used as an example. It can be noted that, the "session management function" in the following example is a session management function in the home network of the user equipment, corresponds to a home session management function in a roaming scenario, and corresponds to a session management function in a non-roaming or local roaming scenario.

Scenario 1 to Scenario 4 to which the technical solutions of this application may be applied are first described with reference to Table 1.

**Table 1**

| Scenario | Home PLMN | Source PLMN | Target PLMN |
|---|---|---|---|
| Scenario 1: V-SMF insertion | PLMN 1 | PLMN 1 | PLMN 2 |
| Scenario 2: V-SMF change | PLMN 1 | PLMN 2 | PLMN 3 |
| Scenario 3: V-SMF change | PLMN 1 | PLMN 2 | PLMN 2 |
| Scenario 4: V-SMF removal | PLMN 1 | PLMN 2 | PLMN 1 |

### Scenario 1:

The user equipment moves from a home network to a visited network, a visited session management function is inserted, and the target access and mobility management function communicates with a session management function in the home network by using the inserted visited session management function.

For example, as shown in Table 1, the user equipment moves from the home network PLMN 1 to the visited network PLMN 2, a visited session management function in the PLMN 2 is inserted, and the visited session management function communicates with a session management function in the PLMN 1.

### Scenario 2:

The user equipment moves between different visited networks, a visited session management function changes from a visited session management function in a source visited network to a visited session management function in a target visited network, and the target access and mobility management function communicates with a session management function in a home network by using the visited session management function in the target visited network.

For example, as shown in Table 1, the user equipment moves from the visited network PLMN 2 to the visited network PLMN 3, a source visited session management function in the PLMN 2 is changed into a target visited session management function in the PLMN 3, and the target visited session management function in the PLMN 3 communicates with a session management function in the PLMN 1.

### Scenario 3:

The user equipment moves within a same visited network, a visited session management function changes from a visited session management function in the visited network to another visited session management function in the visited network, and the target access and mobility management function communicates with a session management function in a home network by using the another visited session management function.

For example, as shown in Table 1, the user equipment moves within the visited network PLMN 2, a visited session management function changes from a source visited session management function in the PLMN 2 to a target visited session management function in the PLMN 2, and the target visited session management function in the PLMN 2 communicates with a session management function in the PLMN 1.

### Scenario 4:

The user equipment moves from a visited network to a home network, a visited session management function in the visited network is removed, and an access and mobility management function in the home network communicates with a session management function in the home network.

For example, as shown in Table 1, the user equipment moves from the visited network PLMN 2 to the home network PLMN 1, and an access and mobility management function in the PLMN 1 communicates with a session management function in the PLMN 1.

It can be noted that, in a non-roaming or local roaming case, the session management function in the home network is referred to as a session management function. In a home roaming case, the session management function in the home network is referred to as a home session management function, and for ease of description, is referred to as a session management function in the following example.

The following describes the N2 handover procedure in different scenarios.

### Example 1

This example shows the N2 handover procedure in Scenario 1.

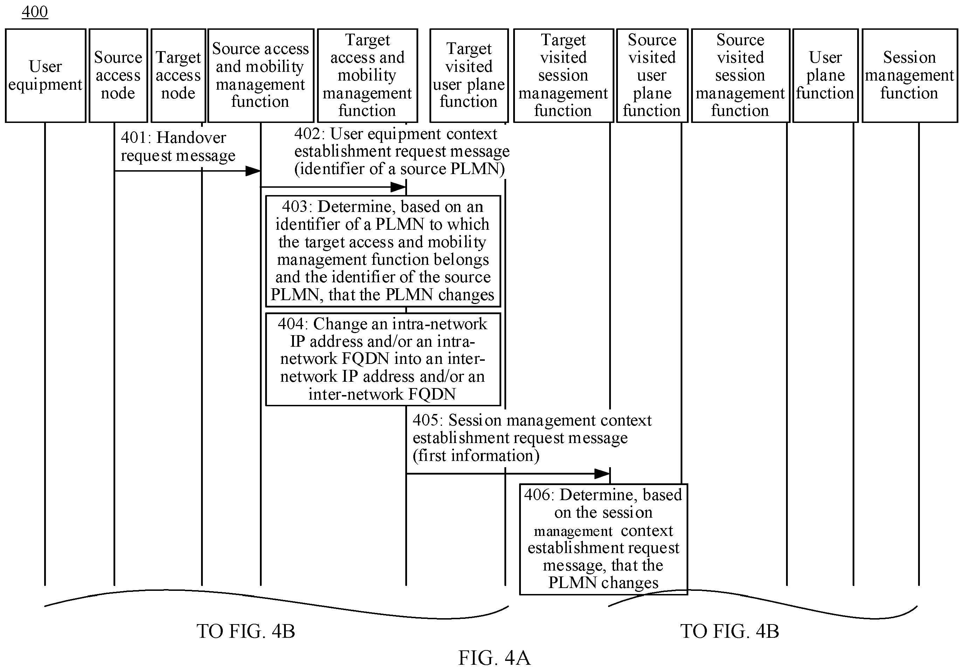

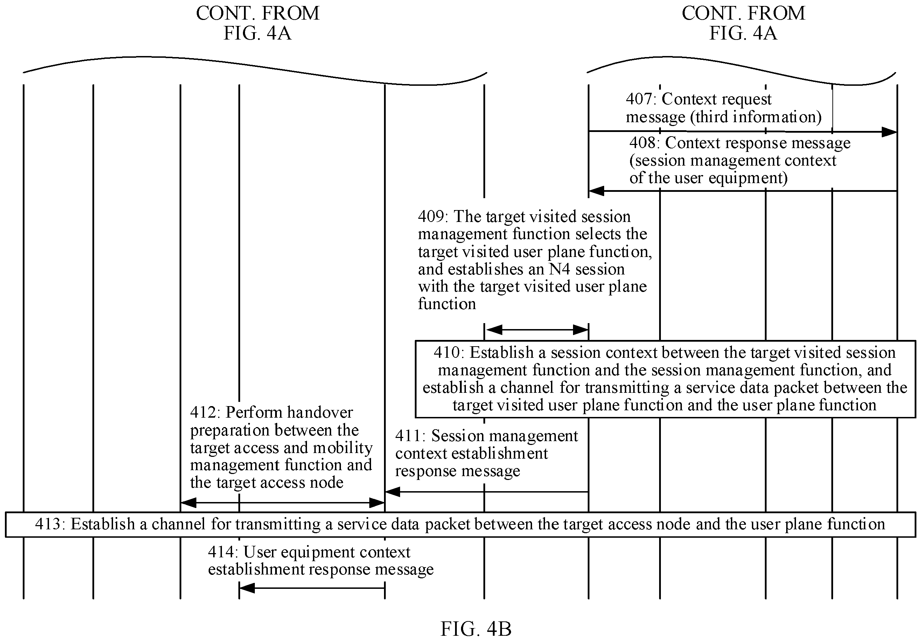

FIG. 4A and FIG. 4B are an example of a communication method according to this application. In FIG. 4A and FIG. 4B, a session management network element corresponds to the foregoing source session management function, and a target visited session management function corresponds to the foregoing target session management function.

Step 401: A source access node sends a handover request message (handover required) to a source access and mobility management function.

Correspondingly, the source access and mobility management function receives the handover request message from the source access node.

The handover request message carries an identifier of a target access node.

Step 402: The source access and mobility management function selects a target access and mobility management function based on the identifier of the target access node, and sends a user equipment context establishment request message to the target access and mobility management function.

Correspondingly, the target access and mobility management function receives the user equipment context establishment request message from the source access and mobility management function.

The user equipment context establishment request message includes an identifier of a source PLMN, an identifier of a session management function, and a URI of a session management context of the session management function. The source PLMN may be a PLMN to which the source access and mobility management function belongs. The session management function herein is an identifier of the session management function in a home network. The URI of the session management context of the session management function includes an intra-network IP address or an intra-network FQDN of the session management function.

Optionally, the identifier of the source PLMN is carried in an information element of a message body of the user equipment context establishment request message.

Optionally, the identifier of the source PLMN is carried in a 5G GUTI of the URI of the user equipment context establishment request message.

Optionally, a structure of the URI of the session management context of the session management function is as follows:
{apiRoot}/nsmf-pdusession/<apiVersion>/sm-contexts/{smContextRef}.

An {apiRoot} part includes the intra-network IP address or the intra-network FQDN of the session management function.

In a possible implementation, the user equipment context establishment request message is Namf_Communication_CreateUEContext Request.

Step 403: After receiving the user equipment context establishment request message, the target access and mobility management function determines, based on an identifier of a PLMN to which the target access and mobility management function belongs and the identifier of the source PLMN, that the PLMN changes.

In a possible implementation, when the identifier of the PLMN to which the target access and mobility management function belongs is different from the identifier of the source PLMN, the target access and mobility management function determines that the PLMN changes.

Step 404: The target access and mobility management function changes, into an inter-network IP address and/or an inter-network FQDN of the session management function, the intra-network IP address and/or the intra-network FQDN that are/is included in the URI of the session management context of the session management function.

In a possible implementation, the target access and mobility management function obtains registration information of the session management function locally based on the identifier of the session management function, where the registration information includes the inter-network IP address and/or the inter-network FQDN of the session management function. The target access and mobility management function changes, into the inter-network IP address and/or the inter-network FQDN of the session management function that are/is included in the registration information, the intra-network IP address and/or the intra-network FQDN that are/is included in the URI of the session management function.

In another possible implementation, the target access and mobility management function obtains registration information of the session management function from a network repository function based on the identifier of the session management function. The network repository function returns the registration information of the session management function to the target access and mobility management function, where the registration information includes the inter-network IP address and/or the inter-network FQDN of the session management function. The target access and mobility management function changes, into the inter-network IP address and/or the inter-network FQDN of the session management function that are/is included in the registration information, the intra-network IP address and/or the intra-network FQDN that are/is included in the URI of the session management function.

If the intra-network IP address and/or the intra-network FQDN of the session management function are/is included in the {apiRoot} part of the URI of the session management context of the session management function, the target access and mobility management function changes, into the inter-network IP address and/or the inter-network FQDN of the session management function, the IP address and/or the FQDN that are/is included in the {apiRoot} part of the URI.

Step 405: The target access and mobility management function sends a session management context establishment request message to the target visited session management function.

Correspondingly, the target visited session management function receives the session management context establishment request message from the target access and mobility management function.

The session management context establishment request message includes first information and the identifier of the session management function, and the first information is used to determine that the PLMN changes.

Optionally, the first information is the identifier of the source PLMN. The identifier of the source PLMN is carried in an information element of a message body of the session management context establishment request message.

Optionally, the first information is the FQDN that is included in the URI of the session management context of the session management function and that is obtained through change by using the target access and mobility management function. For example, when a network device uses the IP address for communication through an intra-PLMN interface, and uses the FQDN for communication through an inter-PLMN interface, the first information is the FQDN that is included in the URI of the session management context of the session management function and that is obtained through change by using the target access and mobility management function.

Optionally, the first information is the IP address that is included in the URI of the session management context of the session management function and that is obtained through change by using the target access and mobility management function. For example, when a network device uses the FQDN for communication through an intra-PLMN interface, and uses the IP address for communication through an inter-PLMN interface, the first information is the IP address that is included in the URI of the session management context of the session management function and that is obtained through change by using the target access and mobility management function.

In a possible implementation, the session management context establishment request message is Nsmf_PDUSession_CreateSM Context Request.

Step 406: After receiving the session management context establishment request message, the target visited session management function determines, based on the session management context establishment request message, that the PLMN changes.

In a possible implementation, if the session management context establishment request message includes the identifier of the source PLMN, the target visited session management function determines that the PLMN changes.

In another possible implementation, if the session management context establishment request message includes the identifier of the source PLMN, and the identifier of the source PLMN is different from an identifier of a PLMN to which the target visited session management function belongs, the target visited session management function determines that the PLMN changes.

In still another possible implementation, if the URI of the session management context of the session management function includes the FQDN, the target visited session management function determines that the PLMN changes.

In yet another possible implementation, if the URI of the session management context of the session management function includes the IP address, the target visited session management function determines that the PLMN changes.

Step 407: The target visited session management function sends a context request message to the session management function by using a security proxy device.

Correspondingly, the session management function receives the context request message sent by the target visited session management function by using the security proxy device.

The context request message is used to obtain a session management context of the user equipment. The context request message includes third information. The third information indicates the visited session management function to obtain the session management context of the user equipment.

Optionally, the third information may include first indication information, and the first indication information indicates that the target visited session management function is a visited session management function.

Optionally, the third information includes an identifier of a target PLMN.

The session management function herein is the session management function identified by using the URI or the identifier of the session management function carried in the session management context establishment request message in step 405.

In an implementation, when determining that the PLMN changes, the target visited session management function determines to communicate with the session management function by using the security proxy device. Specifically, the message sent by the target visited session management function may be processed through the following Processing 1 or Processing 2.

### Processing 1

The target visited session management function constructs a URI of the context request message based on the URI of the session management context of the session management function in the session management context establishment request message, where the URI is {apiRoot}/nsmf-pdusession/{apiVersion}/sm-contexts/{smContextRef}/retrieve, an {apiRoot} part is changed into <Label representing FQDN from other PLMN>.<FQDN of the SEPP in the request initiating PLMN>, a <Label representing FQDN from other PLMN> part is the FQDN in {apiRoot} of the URI of the session management context in the session management context establishment request message, and <FQDN of the SEPP in the request initiating PLMN> is an FQDN of the security proxy device.

### Processing 2

The target visited session management function constructs a URI of the context request message based on the URI of the session management context of the session management function in the session management context establishment request message, where the URI is {apiRoot}/nsmf pdusession/{apiVersion}/sm-contexts/{smContextRef}/retrieve, an FQDN or an IP address in {apiRoot} is changed into an FQDN or an IP address of the security proxy device, and {apiRoot} in the URI of the session management context in the session management context establishment request message is carried in a 3gpp-Sbi-Target-apiRoot header of the context request message.

In a possible implementation, the context request message is Nsmf_PDUSession_Context Request.

Step 408: The session management function sends a context response message to the target visited session management function based on the received context request message by using the security proxy device.

Correspondingly, the target visited session management function receives the context response message from the session management function.

The context response message includes the session management context of the user equipment. Because the third information indicates the visited session management function to obtain the session management context of the user equipment, the session management context of the user equipment herein includes related information of a home session management function. The related information of the home session management function may include at least one of the following information: a URI of the home session management function (hSmfUri), a home network slice identifier (hplmnSnssai), a home session management function instance identifier (hSmfInstanceId), or a home session management function service instance identifier (hSmfServiceInstanceId).

In a possible implementation, the session management function determines, based on the third information in the context request message, that the session management context of the user equipment is obtained by the visited session management function. The session management function sends the related information of the home session management function to the target visited session management function by using the context response message.

There are many manners in which the session management function determines, based on the third information in the context request message, that the session management context of the user equipment is obtained by the visited session management function. This is not limited in this application.

For example, if the third information includes the first indication information, and the first indication information indicates that the target session management function is the visited session management function, the session management function determines, based on the first indication information, that the session management context of the user equipment is obtained by the visited session management function.

For another example, if the third information includes a target PLMN, the session management function determines that the session management context of the user equipment is obtained by the visited session management function. In other words, the context request message sent by the visited session management function carries the target PLMN, namely, the PLMN to which the visited session management function belongs, and the context request message sent by an intermediate session management function does not carry the source PLMN.

For another example, if the third information includes a target PLMN, the session management function determines, based on the target PLMN and the identifier of the PLMN to which the session management function belongs, that the PLMN changes, to determine that the session management context of the user equipment is obtained by the visited session management function.

In a possible implementation, the context response message is Nsmf_PDUSession_Context Response.

Step 409: The target visited session management function selects a target visited user plane function, and establishes an N4 session with the target visited user plane function.

Step 410: Establish a session context between the target visited session management function and the session management function, and establish a channel for transmitting a service data packet between the target visited user plane function and a user plane function.

Step 411: The target visited session management function sends a session management context establishment response message to the target access and mobility management function.

Correspondingly, the target access and mobility management function receives the session management context establishment response message from the target visited session management function.

The session management context establishment response message indicates that the session management context of the user equipment is successfully established.

In a possible implementation, the session management context establishment response message is Nsmf_PDUSession_CreateSMContext Response.

Step 412: Perform handover preparation between the target access and mobility management function and the target access node.

Step 413: Establish a channel for transmitting a service data packet between the target access node and the user plane function.

Step 414: The target access and mobility management function sends a user equipment context establishment response message to the source access and mobility management function.

Correspondingly, the source access and mobility management function receives the user equipment context establishment response message from the target access and mobility management function.

The user equipment context establishment response message indicates that the context of the user equipment is successfully established.

In a possible implementation, the user equipment context establishment response message is Namf_Communication_Create UEContext Response.

### Example 2

This example shows the N2 handover procedure in Scenario 2.

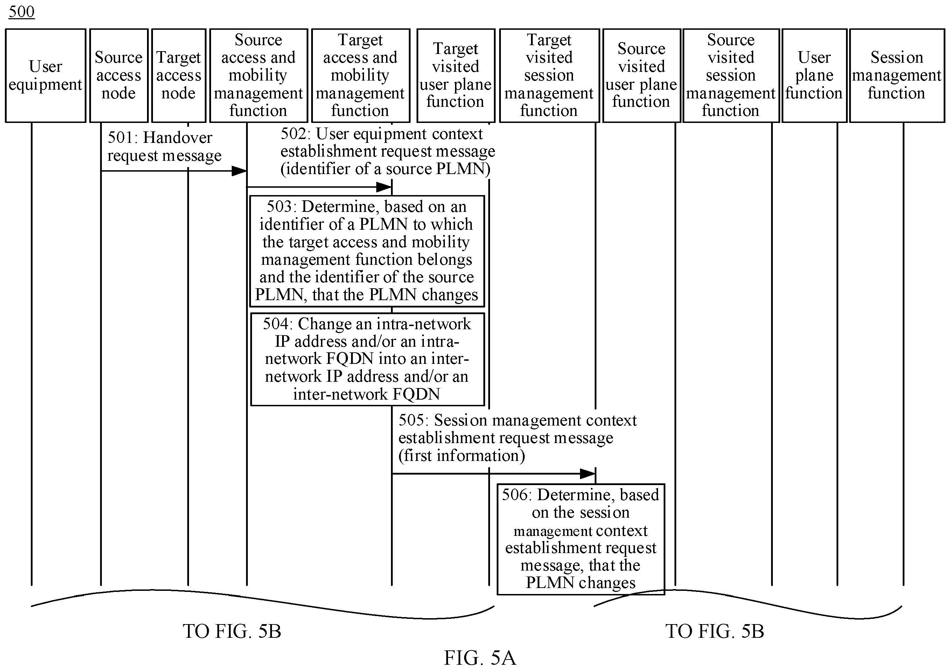

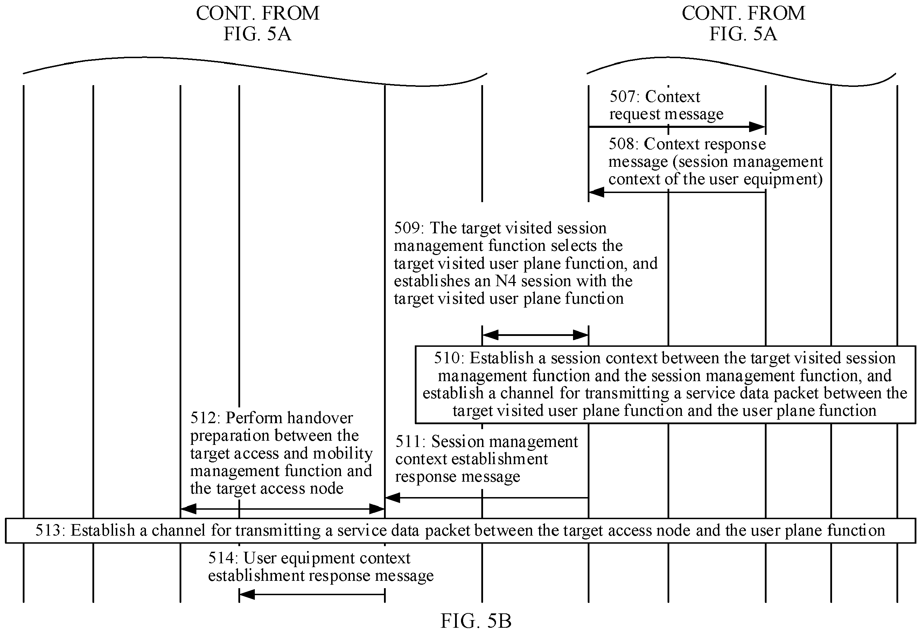

FIG. 5A and FIG. 5B are another example of a communication method according to this application. A source visited session management network element in FIG. 5A and FIG. 5B corresponds to the foregoing source session management function, and a target visited session management function corresponds to the foregoing target session management function.

Step 501: A source access node sends a handover request message to a source access and mobility management function.

Correspondingly, the source access and mobility management function receives the handover request message from the source access node.

The handover request message carries an identifier of a target access node.

Step 502: The source access and mobility management function selects a target access and mobility management function based on the identifier of the target access node, and sends a user equipment context establishment request message to the target access and mobility management function.

Correspondingly, the target access and mobility management function receives the user equipment context establishment request message from the source access and mobility management function.

The user equipment context establishment request message includes an identifier of a source PLMN, an identifier of a source visited session management function, a URI of a session management context of the source visited session management function, and an identifier of a session management function. The source PLMN may be a PLMN to which the source access and mobility management function belongs. The session management function herein is an identifier of the session management function in a home network. The URI of the session management context of the source visited session management function includes an intra-network IP address or an intra-network FQDN of the source visited session management function.

Optionally, the identifier of the source PLMN is carried in an information element of a message body of the user equipment context establishment request message.

Optionally, the identifier of the source PLMN is carried in a 5G GUTI of the URI of the user equipment context establishment request message.

Optionally, a structure of the URI of the session management context of the source visited session management function is as follows:
{apiRoot}/nsmf-pdusession/<apiVersion>/sm-contexts/{smContextRef}.

An {apiRoot} part includes the intra-network IP address or the intra-network FQDN of the source visited session management function.

In a possible implementation, the user equipment context establishment request message is Namf_Communication_CreateUEContext Request.

Step 503: After receiving the user equipment context establishment request message, the target access and mobility management function determines, based on an identifier of a PLMN to which the target access and mobility management function belongs and the identifier of the source PLMN, that the PLMN changes.

In a possible implementation, when the identifier of the PLMN to which the target access and mobility management function belongs is different from the identifier of the source PLMN, the target access and mobility management function determines that the PLMN changes.

Step 504: The target access and mobility management function changes, into an inter-network IP address and/or an inter-network FQDN of the source visited session management function, the intra-network IP address and/or the intra-network FQDN that are/is included in the URI of the session management context of the source visited session management function.

In a possible implementation, the target access and mobility management function obtains registration information of the source visited session management function locally based on the identifier of the source visited session management function, where the registration information includes the inter-network IP address and/or the inter-network FQDN of the source visited session management function. The target access and mobility management function changes, into the inter-network IP address and/or the inter-network FQDN of the source visited session management function that are/is included in the registration information, the intra-network IP address and/or the intra-network FQDN that are/is included in the URI of the source visited session management function.

In another possible implementation, the target access and mobility management function obtains registration information of the source visited session management function from a network repository function based on the identifier of the source visited session management function. The network repository function returns the registration information of the source visited session management function to the target access and mobility management function, where the registration information includes the inter-network IP address and/or the inter-network FQDN of the source visited session management function. The target access and mobility management function changes, into the inter-network IP address and/or the inter-network FQDN of the source visited session management function that are/is included in the registration information, the intra-network IP address and/or the intra-network FQDN that are/is included in the URI of the source visited session management function.

If the intra-network IP address and/or the intra-network FQDN of the source visited session management function are/is included in the {apiRoot} part of the URI of the session management context of the source visited session management function, the target access and mobility management function changes, into the inter-network IP address and/or the inter-network FQDN of the source visited session management function, the IP address and/or the FQDN that are/is included in the {apiRoot} part of the URI.

Step 505: The target access and mobility management function sends a session management context establishment request message to the target visited session management function.

Correspondingly, the target visited session management function receives the session management context establishment request message from the target access and mobility management function.

The session management context establishment request message includes first information and the identifier of the session management function, and the first information indicates that the PLMN changes.

Optionally, the first information is the identifier of the source PLMN. The identifier of the source PLMN is carried in an information element of a message body of the session management context establishment request message.

Optionally, the first information is the FQDN that is included in the URI of the source visited session management function and that is obtained through change by using the target access and mobility management function. For example, when a network device uses the IP address for communication through an intra-PLMN interface, and uses the FQDN for communication through an inter-PLMN interface, the first information is the FQDN that is included in the URI of the source visited session management function and that is obtained through change by using the target access and mobility management function.

Optionally, the first information is the IP address that is included in the URI of the source visited session management function and that is obtained through change by using the target access and mobility management function. For example, when a network device uses the FQDN for communication through an intra-PLMN interface, and uses the IP address for communication through an inter-PLMN interface, the first information is the IP address that is included in the URI of the source visited session management function and that is obtained through change by using the target access and mobility management function.

In a possible implementation, the session management context establishment request message is Nsmf_PDUSession_CreateSM Context Request.

Step 506: After receiving the session management context establishment request message, the target visited session management function determines, based on the session management context establishment request message, that the PLMN changes.

In a possible implementation, if the session management context establishment request message includes the identifier of the source PLMN, the target visited session management function determines that the PLMN changes.

In another possible implementation, if the session management context establishment request message includes the identifier of the source PLMN, and the identifier of the source PLMN is different from an identifier of a PLMN to which the target visited session management function belongs, the target visited session management function determines that the PLMN changes.

In still another possible implementation, if the URI of the session management context of the session management function in the session management context establishment request message includes the FQDN, the target visited session management function determines that the PLMN changes.

In yet another possible implementation, if the URI of the session management context of the session management function in the session management context establishment request message includes the IP address, the target visited session management function determines that the PLMN changes.

Step 507: The target visited session management function sends a context request message to the source visited session management function by using a security proxy device.

Correspondingly, the source visited session management function receives the context request message sent by the target visited session management function by using the security proxy device.

The context request message is used to obtain a session management context of the user equipment.

The session management function herein is the session management function identified by using the URI of the session management context or the identifier of the source visited session management function carried in the session management context establishment request message in step 505.

In a possible implementation, when determining that the PLMN changes, the target visited session management function determines to communicate with the session management function by using the security proxy device. Specifically, the message sent by the target visited session management function may be processed through Processing 1 or Processing 2. For descriptions of Processing 1 and Processing 2, refer to Example 1. Details are not described herein again.

In a possible implementation, the context request message is Nsmf_PDUSession_Context Request.

Step 508: The source visited session management function sends a context response message to the target visited session management function based on the received context request message by using the security proxy device.

Correspondingly, the target visited session management function receives the context response message from the source visited session management function.

The context response message includes the session management context of the user equipment.

In a possible implementation, the context response message is Nsmf_PDUSession_Context Response.

For step 509 to step 514, refer to step 409 to step 414 in Example 1. Details are not described herein again.

### Example 3

This example shows the N2 handover procedure in Scenario 3.

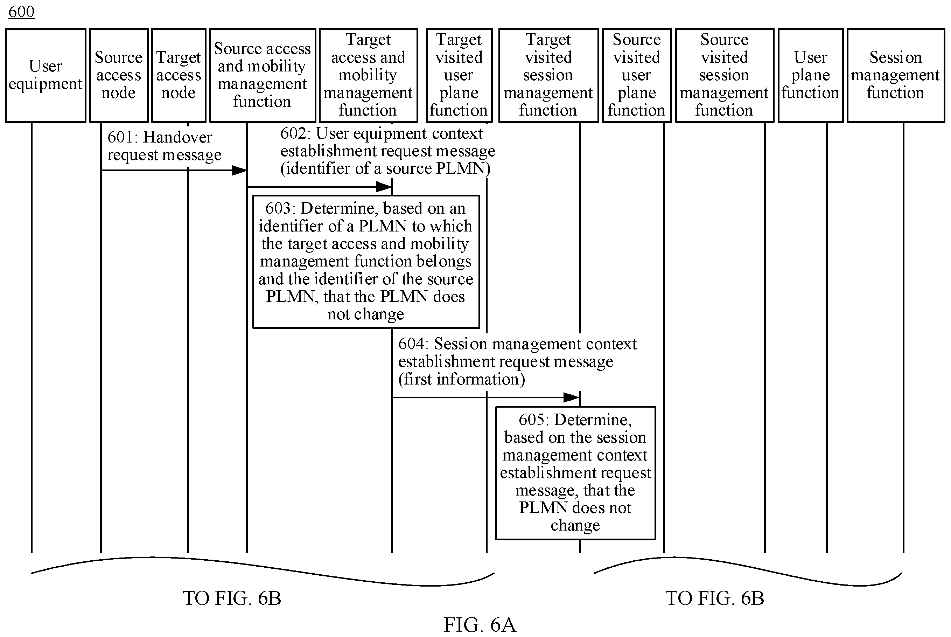

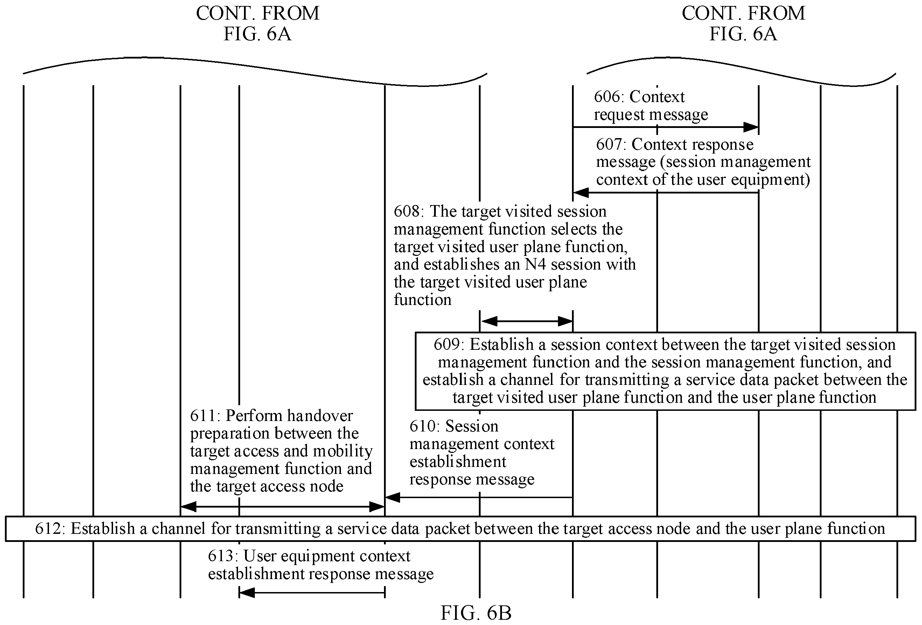

FIG. 6 A and FIG. 6B are another example of a communication method according to this application. A source visited session management network element in FIG. 6A and FIG. 6B corresponds to the foregoing source session management function, and a target visited session management function corresponds to the foregoing target session management function.

Step 601: A source access node sends a handover request message to a source access and mobility management function.

Correspondingly, the source access and mobility management function receives the handover request message from the source access node.

The handover request message carries an identifier of a target access node.

Step 602: The source access and mobility management function selects a target access and mobility management function based on the identifier of the target access node, and sends a user equipment context establishment request message to the target access and mobility management function.

Correspondingly, the target access and mobility management function receives the user equipment context establishment request message from the source access and mobility management function.

The user equipment context establishment request message includes an identifier of a source PLMN, an identifier of a source visited session management function, a URI of a session management context of the source visited session management function, and an identifier of a session management function. The source PLMN may be a PLMN to which the source access and mobility management function belongs. The session management function herein is an identifier of the session management function in a home network. The URI of the session management context of the source visited session management function includes an intra-network IP address or an intra-network FQDN of the session management function.

Optionally, the identifier of the source PLMN is carried in an information element of a message body of the user equipment context establishment request message.

Optionally, the identifier of the source PLMN is carried in a 5G GUTI of the URI of the user equipment context establishment request message.

Optionally, a structure of the URI of the session management context of the source visited session management function is as follows:
{apiRoot}/nsmf-pdusession/<apiVersion>/sm-contexts/{smContextRef}.

An {apiRoot} part includes the intra-network IP address or the intra-network FQDN of the source visited session management function.

In a possible implementation, the user equipment context establishment request message is Namf_Communication_ CreateUEContext Request.

Step 603: After receiving the user equipment context establishment request message, the target access and mobility management function determines, based on an identifier of a PLMN to which the target access and mobility management function belongs and the identifier of the source PLMN, that the PLMN does not change.

In a possible implementation, when the identifier of the PLMN to which the target access and mobility management function belongs is the same as the identifier of the source PLMN, the target access and mobility management function determines that the PLMN does not change.

Step 604: The target access and mobility management function sends a session management context establishment request message to the target visited session management function.

Correspondingly, the target visited session management function receives the session management context establishment request message from the target access and mobility management function.

The session management context establishment request message includes the URI of the session management context of the source visited session management function, the identifier of the source visited session management function, and the identifier of the session management function.

Optionally, the session management context establishment request message includes first information, where the first information indicates that the PLMN does not change.

Optionally, the first information is the identifier of the source PLMN. The identifier of the source PLMN is carried in an information element of a message body of the session management context establishment request message.

Optionally, the first information is the IP address included in the URI of the session management context of the source visited session management function. For example, when a network device uses the IP address for communication through an intra-PLMN interface, and uses the FQDN for communication through an inter-PLMN interface, the first information may be the IP address included in the URI of the session management context of the source visited session management function.

Optionally, the first information is the FQDN included in the URI of the session management context of the source visited session management function. For example, when a network device uses the FQDN for communication through an intra-PLMN interface, and uses the IP address for communication through an inter-PLMN interface, the first information may be the FQDN included in the URI of the session management context of the source visited session management function.

In a possible implementation, the session management context establishment request message is Nsmf_PDUSession_CreateSM Context Request.

Step 605: After receiving the session management context establishment request message, the target visited session management function determines, based on the session management context establishment request message, that the PLMN does not change.

In a possible implementation, if the session management context establishment request message does not carry the identifier of the source PLMN, the target visited session management function determines that the PLMN does not change.

In another possible implementation, if the session management context establishment request message includes the first information, the target visited session management function determines, based on the first information, that the PLMN does not change. For example, if the first information is the identifier of the source PLMN, and the identifier of the source PLMN is the same as an identifier of a PLMN to which the target visited session management function belongs, the target visited session management function determines that the PLMN does not change. For another example, if the URI of the session management context of the source visited session management function includes the FQDN, the target visited session management function determines that the PLMN does not change. For another example, if the URI of the session management context of the visited session management function includes the IP address, the target visited session management function determines that the PLMN does not change.

Step 606: The target visited session management function sends a context request message to the source visited session management function.

Correspondingly, the source visited session management function receives the context request message sent by the target visited session management function.

The context request message is used to obtain a session management context of the user equipment.

The source visited session management function herein is the session management function identified by using the URI or the identifier of the source visited session management function carried in the session management context establishment request message in step 604.

In a possible implementation, the context request message is Nsmf_PDUSession_Context Request.

Step 607: The source visited session management function sends a context response message to the target visited session management function based on the received context request message.

Correspondingly, the target visited session management function receives the context response message from the source visited session management function.

The context response message includes the session management context of the user equipment.

In a possible implementation, the context response message is Nsmf_PDUSession_Context Response.

It can be noted that, because the target visited session management function determines that the PLMN does not change in step 605, the target visited session management function and the source visited session management function do not need to communicate with each other by using a security proxy device in step 606 and step 607.

For step 608 to step 613, refer to step 409 to step 414 in Example 1. Details are not described herein again.

### Example 4

This example shows the N2 handover procedure in Scenario 4.

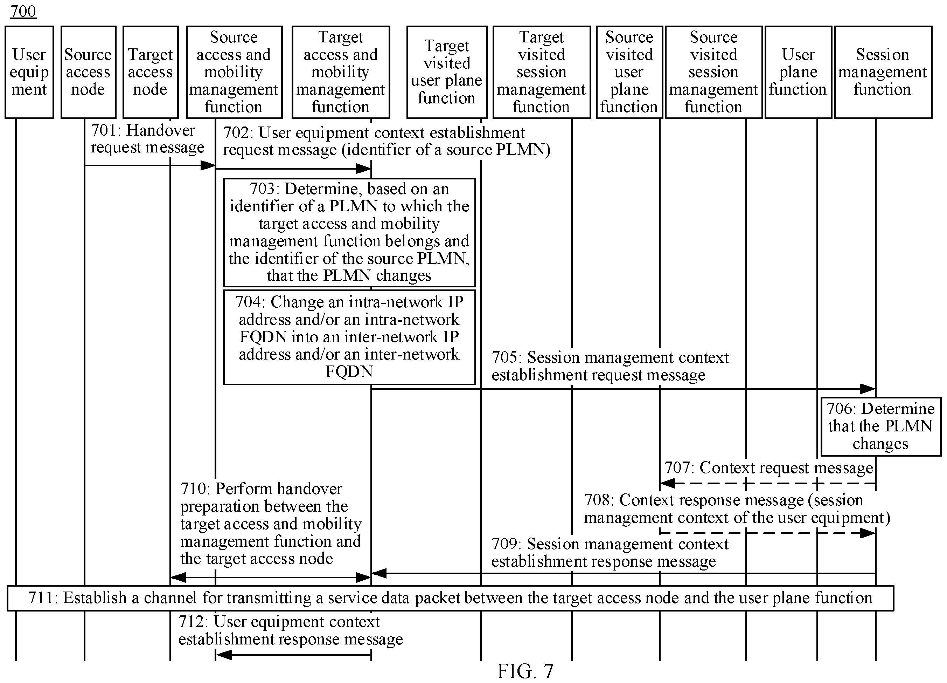

FIG. 7 is another example of a communication method according to this application. A source visited session management network element in FIG. 7 corresponds to the foregoing source session management function, and a session management function corresponds to the foregoing target session management function.

Step 701: A source access node sends a handover request message to a source access and mobility management function.

Correspondingly, the source access and mobility management function receives the handover request message from the source access node.

The handover request message carries an identifier of a target access node.

Step 702: The source access and mobility management function selects a target access and mobility management function based on the identifier of the target access node, and sends a user equipment context establishment request message to the target access and mobility management function.

Correspondingly, the target access and mobility management function receives the user equipment context establishment request message from the source access and mobility management function.

The user equipment context establishment request message includes an identifier of a source PLMN, an identifier of a source visited session management function, a URI of a session management context of the source visited session management function, and an identifier of the session management function. The source PLMN may be a PLMN to which the source access and mobility management function belongs. The session management function herein is an identifier of the session management function in a home network. The URI of the session management context of the source visited session management function includes an intra-network IP address or an intra-network FQDN of the source visited session management function.

Optionally, the identifier of the source PLMN is carried in an information element of a message body of the user equipment context establishment request message.

Optionally, the identifier of the source PLMN is carried in a 5G GUTI of the URI of the user equipment context establishment request message.

Optionally, a structure of the URI of the session management context of the source visited session management function is as follows:
{apiRoot}/nsmf-pdusession/<apiVersion>/sm-contexts/{smContextRef}.

An {apiRoot} part includes the intra-network IP address or the intra-network FQDN of the source visited session management function.

In a possible implementation, the user equipment context establishment request message is Namf_Communication_CreateUEContext Request.

Step 703: After receiving the user equipment context establishment request message, the target access and mobility management function determines, based on an identifier of a PLMN to which the target access and mobility management function belongs and the identifier of the source PLMN, that the PLMN changes.

In a possible implementation, when the identifier of the PLMN to which the target access and mobility management function belongs is different from the identifier of the source PLMN, the target access and mobility management function determines that the PLMN changes.

Step 704: The target access and mobility management function changes, into an inter-network IP address and/or an inter-network FQDN of the source visited session management function, the intra-network IP address and/or the intra-network FQDN that are/is included in the URI of the session management context of the source visited session management function.

In a possible implementation, the target access and mobility management function obtains registration information of the source visited session management function locally based on the identifier of the source visited session management function, where the registration information includes the inter-network IP address and/or the inter-network FQDN of the source visited session management function. The target access and mobility management function changes, into the inter-network IP address and/or the inter-network FQDN of the source visited session management function that are/is included in the registration information, the intra-network IP address and/or the intra-network FQDN that are/is included in the URI of the source visited session management function.

In another possible implementation, the target access and mobility management function obtains registration information of the source visited session management function from a network repository function based on the identifier of the source visited session management function. The network repository function returns the registration information of the source visited session management function to the target access and mobility management function, where the registration information includes the inter-network IP address and/or the inter-network FQDN of the source visited session management function. The target access and mobility management function changes, into the inter-network IP address and/or the inter-network FQDN of the source visited session management function that are/is included in the registration information, the intra-network IP address and/or the intra-network FQDN that are/is included in the URI of the source visited session management function.

If the intra-network IP address and/or the intra-network FQDN of the source visited session management function are/is included in the {apiRoot} part of the URI of the session management context of the source visited session management function, the target access and mobility management function changes, into the inter-network IP address and/or the inter-network FQDN of the source visited session management function, the IP address and/or the FQDN that are/is included in the {apiRoot} part of the URI.

Step 705: The target access and mobility management function sends a session management context establishment request message to the session management function.

Correspondingly, the session management function receives the session management context establishment request message from the target access and mobility management function.

The session management context establishment request message includes a URI that is of the session management context of the source visited session management function and that is obtained through change by using the target access and mobility management function, and the identifier of the source visited session management function.

In a possible implementation, the session management context establishment request message is Nsmf_PDUSession_CreateSM Context Request.

Step 706: After receiving the session management context establishment request message, the session management function determines that the PLMN changes.

In a possible implementation, if the session management context establishment request message includes the identifier of the source PLMN, the target visited session management function determines that the PLMN changes.

In another possible implementation, if the session management context establishment request message includes the identifier of the source PLMN, and the identifier of the source PLMN is different from an identifier of a PLMN to which the target visited session management function belongs, the target visited session management function determines that the PLMN changes.

In still another possible implementation, if the URI of the session management context of the source visited session management function in the session management context establishment request message includes the FQDN, the target visited session management function determines that the PLMN changes.

In yet another possible implementation, if the URI of the session management context of the source visited session management function in the session management context establishment request message includes the IP address, the target visited session management function determines that the PLMN changes.

Step 707: The session management function sends a context request message to the source visited session management function by using a security proxy device.

Correspondingly, the source visited session management function receives the context request message sent by the session management function by using the security proxy device.

The context request message is used to obtain a session management context of the user equipment.

The source visited session management function herein is the session management function identified by using the URI of the session management context or the identifier of the source visited session management function carried in the session management context establishment request message in step 705.

In an implementation, when determining that the PLMN changes, the session management function determines to communicate with the source visited session management function by using the security proxy device. Specifically, the message sent by the session management function may be processed through Processing 1 or Processing 2. For Processing 1 and Processing 2, refer to Example 1. Details are not described herein again.

In a possible implementation, the context request message is Nsmf_PDUSession_Context Request.

Step 708: The source visited session management function sends a context response message to the session management function based on the received context request message by using the security proxy device.

Correspondingly, the session management function receives the context response message from the source visited session management function.

The context response message includes the session management context of the user equipment.

In a possible implementation, the context response message is Nsmf_PDUSession_Context Response.

Step 709: The session management function sends a session management context establishment response message to the target access and mobility management function.

Correspondingly, the target access and mobility management function receives the session management context establishment response message from the session management function.

The session management context establishment response message indicates that the session management context of the user equipment is successfully established.

In a possible implementation, the session management context establishment response message is Nsmf_PDUSession_CreateSMContext Response.

For step 710 to step 712, refer to step 412 to step 414 in Example 1. Details are not described herein again.

It can be noted that step 707 and step 708 are optional steps. Because the session management function is an anchor, the session management function does not change in a process in which the user equipment moves. Consequently, the session management function may not obtain the session management context of the user equipment from the source visited session management function.

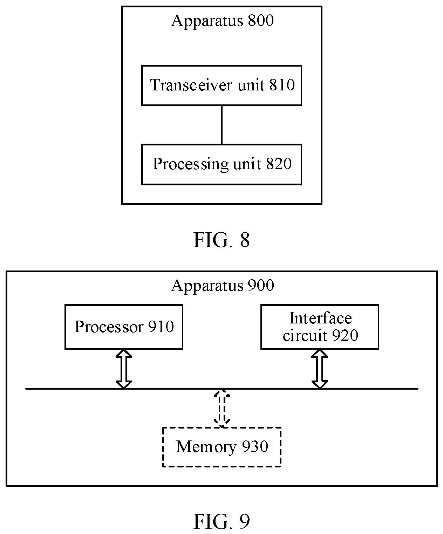

The foregoing describes in detail the methods provided in this application with reference to FIG. 2 to FIG. 7. The following describes in detail apparatus embodiments of this application with reference to FIG. 8 and FIG. 9. It may be understood that, to implement functions in the foregoing embodiments, an apparatus in FIG. 8 or FIG. 9 includes a corresponding hardware structure and/or software module for performing each function. A person skilled in the art should be easily aware that, in combination with units and method steps in the examples described in embodiments disclosed in this application, this application can be implemented by hardware or a combination of hardware and computer software. Whether a function is performed by hardware or hardware driven by computer software depends on a particular application scenario and design constraint condition of the technical solutions.

FIG. 8 and FIG. 9 each are a schematic diagram of a possible structure of an apparatus according to an embodiment of this application. These apparatuses may be configured to implement functions of the target session management function, the target access and mobility management function, the source session management function, or the source access and mobility management function in the foregoing method embodiments, and therefore, can also achieve beneficial effects of the foregoing method embodiments.

As shown in FIG. 8, the apparatus 800 includes a transceiver unit 810 and a processing unit 820.

When the apparatus 800 is configured to implement the function of the target session management function in the foregoing method embodiments, the transceiver unit 810 is configured to: receive first information of a target access and mobility management function from user equipment, where the first information includes an identifier of a communication network to which the source session management function belongs and/or address information of the source session management function; and when the target session management function determines, based on the first information, that a communication network to which the user equipment belongs changes, send a first message to the source session management function by using a security proxy device; and/or when the target session management function determines, based on the first information, that the communication network to which the user equipment belongs does not change, send the first message to the source session management function without using the security proxy device, where the first message is used to obtain a session management context of the user equipment.

Optionally, the transceiver unit 810 is further configured to receive a first URI from the target access and mobility management function, where the first URI is a URI of a session management context of the source session management function; and an FQDN in the first URI is an FQDN of the source session management function, and/or an IP address in the first URI is an IP address of the source session management function. The transceiver unit 810 is specifically configured to: determine a second URI based on the first URI; and send the first message to the security proxy device based on the second URI. The second URI includes an FQDN of the security proxy device and/or an IP address of the security proxy device, the first message includes the FQDN of the source session management function and/or the IP address of the source session management function, and the FQDN of the source session management function and/or the IP address of the source session management function are/is used by the security proxy device to send the first message to the source session management function.

Optionally, an FQDN in the second URI is the FQDN of the security proxy device, and/or an IP address in the second URI is the IP address of the security proxy device. Alternatively, an FQDN in the second URI is a telescopic FQDN, and the telescopic FQDN includes the FQDN of the security proxy device.

Optionally, the first information includes the identifier of the communication network to which the source session management function belongs. The apparatus 800 further includes a processing unit 820. When the identifier of the communication network to which the source session management function belongs is different from an identifier of a communication network to which the target session management function belongs, the processing unit 820 is configured to determine that the communication network to which the user equipment belongs changes.

Optionally, the first information includes the address information of the source session management function. The apparatus 800 further includes a processing unit 820. When the address information is inter-network address information of the source session management function, the processing unit 820 is configured to determine that the communication network to which the user equipment belongs changes.

Optionally, the inter-network address information includes an inter-network fully qualified domain name FQDN of the source session management function and/or an inter-network internet protocol IP address of the source session management function.

Optionally, the first information is the identifier of the communication network to which the source session management function belongs. The apparatus 800 further includes a processing unit 820. When the identifier of the communication network to which the source session management function belongs is the same as an identifier of a communication network to which the target session management function belongs, the processing unit 820 is configured to determine that the communication network to which the user equipment belongs does not change.

Optionally, the first information is the address information of the source session management function. The apparatus 800 further includes a processing unit 820. When the address information is intra-network address information of the source session management function, the processing unit 820 is configured to determine that the communication network to which the user equipment belongs does not change.

Optionally, the intra-network address information includes an intra-network FQDN of the source session management function and/or an intra-network IP address of the source session management function.

Optionally, the first information is carried in the first uniform resource identifier URI of the session management context of the source session management function.

Optionally, the communication network to which the source session management function belongs is a home network of the user equipment, the first message includes third information, and the third information indicates that the target session management function is a visited session management function or an intermediate session management function, or the third information indicates the communication network to which the target session management function belongs.

Optionally, the communication network to which the source session management function belongs is a home network of the user equipment, and the communication network to which the target session management function belongs is a visited network of the user equipment. Alternatively, the communication network to which the source session management function belongs is a first visited network of the user equipment, the communication network to which the target session management function belongs is a second visited network of the user equipment, and the first visited network is different from the second visited network. Alternatively, the communication network to which the source session management function belongs is a first visited network of the user equipment, the communication network to which the target session management function belongs is a second visited network of the user equipment, and the first visited network is the same as the second visited network. Alternatively, the communication network to which the source session management function belongs is a visited network of the user equipment, and the communication network to which the target session management function belongs is a home network of the user equipment.

When the apparatus 800 is configured to implement the function of the target access and mobility management function in the foregoing method embodiments, the transceiver unit 810 is configured to: receive, from the source access and mobility management function, an identifier of a communication network to which the source access and mobility management function belongs; and when the target access and mobility management function determines, based on the identifier of the communication network to which the source access and mobility management function belongs, that a communication network to which the user equipment belongs changes, send first information to a target session management function of the user equipment, where the first information includes inter-network address information of a source session management function; and/or when the target access and mobility management function determines, based on the identifier of the communication network to which the source access and mobility management function belongs, that the communication network to which the user equipment belongs does not change, send first information to the target session management function of the user equipment, where the first information includes intra-network address information of the source session management function.

Optionally, the first information is carried in a first uniform resource identifier URI of a session management context of the source session management function.

Optionally, the inter-network address information is an inter-network fully qualified domain name FQDN and/or an inter-network internet protocol IP address; and/or the intra-network address information is an intra-network FQDN and/or an intra-network IP address.

Optionally, the transceiver unit 810 is further configured to: receive an identifier of the source session management function from the source access and mobility management function; and obtain the inter-network address information of the source session management function locally or from a network repository function based on the identifier of the source session management function.

Optionally, the apparatus 800 further includes a processing unit 820. When the identifier of the communication network to which the source access and mobility management function belongs is different from an identifier of a communication network to which the target access and mobility management function belongs, the processing unit 820 is configured to determine that the communication network to which the user equipment belongs changes.

Optionally, the apparatus 800 further includes a processing unit 820. When the identifier of the communication network to which the source access and mobility management function belongs is the same as an identifier of a communication network to which the target access and mobility management function belongs, the processing unit 820 is configured to determine that the communication network to which the user equipment belongs does not change.

Optionally, the identifier of the communication network to which the source access and mobility management function belongs is carried in a uniform resource identifier URI of a second message.

Optionally, the first information further includes the identifier of the communication network to which the source access and mobility management function belongs.

Optionally, the communication network to which the source access and mobility management function belongs is a home network of the user equipment, and the communication network to which the target access and mobility management function belongs is a visited network of the user equipment. Alternatively, the communication network to which the source access and mobility management function belongs is a first visited network of the user equipment, the communication network to which the target access and mobility management function belongs is a second visited network of the user equipment, and the first visited network is different from the second visited network. Alternatively, the communication network to which the source access and mobility management function belongs is a first visited network of the user equipment, the communication network to which the target access and mobility management function belongs is a second visited network of the user equipment, and the first visited network is the same as the second visited network. Alternatively, the communication network to which the source access and mobility management function belongs is a visited network of the user equipment, and the communication network to which the target access and mobility management function belongs is a home network of the user equipment.

When the apparatus 800 is configured to implement the function of the source session management function in the foregoing method embodiments, the transceiver unit 810 is configured to: receive a first message from the target session management function, where the first message is used to obtain a session management context of the user equipment, the first message includes third information, and the third information indicates that the target session management function is a visited session management function or an intermediate session management function, or the third information indicates a communication network to which the target session management function belongs; and send the session management context of the user equipment to the target session management function based on the first message.

Optionally, the transceiver unit 810 is specifically configured to: when the source session management function receives the first message from the target session management function by using a security proxy device, send the session management context of the user equipment to the target session management function by using the security proxy device; and/or when the source session management function receives the first message from the target session management function without using the security proxy device, send the session management context of the user equipment to the target session management function without using the security proxy device.

Optionally, the transceiver unit 810 is specifically configured to: when the third information in the first message indicates that the target session management function is the visited session management function, send a roaming session management context of the user equipment to the target session management function; when the third information in the first message indicates that the target session management function is the intermediate session management function, send a non-roaming session management context of the user equipment to the target session management function; when the third information in the first message indicates the communication network to which the target session management function belongs, and the communication network to which the target session management function belongs is different from a communication network to which the source session management function belongs, send the roaming session management context of the user equipment to the target session management function; and/or when the third information in the first message indicates the communication network to which the target session management function belongs, and the communication network to which the target session management function belongs is the same as the communication network to which the source session management function belongs, send the non-roaming session management context of the user equipment to the target session management function.

Optionally, the communication network to which the source session management function belongs is a home network of the user equipment, and the communication network to which the target session management function belongs is a visited network of the user equipment. Alternatively, the communication network to which the source session management function belongs is a first visited network of the user equipment, the communication network to which the target session management function belongs is a second visited network of the user equipment, and the first visited network is different from the second visited network. Alternatively, the communication network to which the source session management function belongs is a first visited network of the user equipment, the communication network to which the target session management function belongs is a second visited network of the user equipment, and the first visited network is the same as the second visited network. Alternatively, the communication network to which the source session management function belongs is a visited network of the user equipment, and the communication network to which the target session management function belongs is a home network of the user equipment.

When the apparatus 800 is configured to implement the function of the source access and mobility management function in the foregoing method embodiments, the processing unit 820 is configured to determine an identifier of a communication network to which the source access and mobility management function belongs. The transceiver unit 810 is configured to send, to the target source access and mobility management function, the identifier of the communication network to which the source access and mobility management function belongs.

Optionally, the transceiver unit 810 is further configured to send an identifier of the source session management function to the target access and mobility management function.

Optionally, the identifier of the communication network to which the source access and mobility management function belongs is carried in a URI of a second message.

Optionally, the communication network to which the source access and mobility management function belongs is a home network of the user equipment, and the communication network to which the target access and mobility management function belongs is a visited network of the user equipment. Alternatively, the communication network to which the source access and mobility management function belongs is a first visited network of the user equipment, the communication network to which the target access and mobility management function belongs is a second visited network of the user equipment, and the first visited network is different from the second visited network. Alternatively, the communication network to which the source access and mobility management function belongs is a first visited network of the user equipment, the communication network to which the target access and mobility management function belongs is a second visited network of the user equipment, and the first visited network is the same as the second visited network. Alternatively, the communication network to which the source access and mobility management function belongs is a visited network of the user equipment, and the communication network to which the target access and mobility management function belongs is a home network of the user equipment.

For more detailed descriptions of the transceiver unit 810 and the processing unit 820, refer to related descriptions in the foregoing method embodiments. Details are not described herein again.

As shown in FIG. 9, an apparatus 900 includes a processor 910 and an interface circuit 920. The processor 910 and the interface circuit 920 are coupled to each other. It may be understood that the interface circuit 920 may be a transceiver or an input/output interface. Optionally, the apparatus 900 may further include a memory 930, configured to: store instructions to be executed by the processor 910, store input data required by the processor 910 to run instructions, or store data generated after the processor 910 runs instructions. When the apparatus 900 is configured to implement the foregoing method, the processor 910 is configured to implement a function of the foregoing processing unit 820, and the interface circuit 920 is configured to implement a function of the foregoing transceiver unit 810.

When the apparatus 900 is a chip used in a target session management function, the chip implements a function of the target session management function in the foregoing method embodiment. The chip receives information from another module (for example, a radio frequency module or an antenna) in the target session management function, where the information is sent by another apparatus to the target session management function. Alternatively, the chip sends information to another module (for example, a radio frequency module or an antenna) in the target session management function, where the information is sent by the target session management function to another apparatus.

When the apparatus 900 is a chip used in a target access and mobility management function, the chip implements a function of the target access and mobility management function in the foregoing method embodiment. The chip receives information from another module (for example, a radio frequency module or an antenna) in the target access and mobility management function, where the information is sent by another apparatus to the target access and mobility management function. Alternatively, the chip sends information to another module (for example, a radio frequency module or an antenna) in the target access and mobility management function, where the information is sent by the target access and mobility management function to another apparatus.

When the apparatus 900 is a chip used in a source session management function, the chip implements a function of the source session management function in the foregoing method embodiment. The chip receives information from another module (for example, a radio frequency module or an antenna) in the source session management function, where the information is sent by another apparatus to the source session management function. Alternatively, the chip sends information to another module (for example, a radio frequency module or an antenna) in the source session management function, where the information is sent by the source session management function to another apparatus.

When the apparatus 900 is a chip used in a source access and mobility management function, the chip implements a function of the source access and mobility management function in the foregoing method embodiment. The chip receives information from another module (for example, a radio frequency module or an antenna) in the source access and mobility management function, where the information is sent by another apparatus to the source access and mobility management function. Alternatively, the chip sends information to another module (for example, a radio frequency module or an antenna) in the source access and mobility management function, where the information is sent by the source access and mobility management function to another apparatus.

This application further provides a communication apparatus, including a processor. The processor is coupled to a memory. The memory is configured to store a computer program or instructions and/or data. The processor is configured to: execute the computer program or the instructions stored in the memory, or read data stored in the memory, to perform the methods in the foregoing method embodiments. Optionally, there are one or more processors. Optionally, the communication apparatus includes a memory. Optionally, there are one or more memories. Optionally, the memory and the processor are integrated together or disposed separately.

This application further provides a computer-readable storage medium. The computer-readable storage medium stores computer instructions used to implement the method performed by the target session management function, the target access and mobility management function, the source session management function, or the source access and mobility management function in the foregoing method embodiments.

This application further provides a computer program product, including instructions. When the instructions are executed by a computer, the method performed by the target session management function, the target access and mobility management function, the source session management function, or the source access and mobility management function in the foregoing method embodiments is implemented.

This application further provides a communication system. The communication system includes the target session management function, the target access and mobility management function, the source session management function, and the source access and mobility management function in the foregoing embodiments.

For explanations and beneficial effect of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in the target session management function, the target access and mobility management function, the source session management function, or the source access and mobility management function. Certainly, the processor and the storage medium may alternatively exist in the target session management function, the target access and mobility management function, the source session management function, or the source access and mobility management function as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, the procedures or functions in embodiments of this application are completely or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers used in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to specific values or specific scenarios in the examples. It is clear that a person skilled in the art can make various equivalent modifications or changes based on the examples provided above, and such modifications and changes also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to movement of user equipment from a source session management function to a target session management function, and the method comprises:
receiving, by the target session management function, first information from a target access and mobility management function of the user equipment, wherein the first information comprises an identifier of a communication network to which the source session management function belongs and/or address information of the source session management function; and
when the target session management function determines, based on the first information, that a communication network to which the user equipment belongs changes, sending, by the target session management function, a first message to the source session management function by using a security proxy device; and/or when the target session management function determines, based on the first information, that the communication network to which the user equipment belongs does not change, sending, by the target session management function, the first message to the source session management function without using the security proxy device, wherein
the first message is used to obtain a session management context of the user equipment.

2. The method according to claim 1, wherein the method further comprises:
receiving, by the target session management function, a first uniform resource identifier URI from the target access and mobility management function, wherein the first URI is a URI of a session management context of the source session management function; and a fully qualified domain name FQDN in the first URI is an FQDN of the source session management function, and/or an internet protocol IP address in the first URI is an IP address of the source session management function; and
the sending, by the target session management function, a first message to the source session management function by using a security proxy device comprises:
determining, by the target session management function, a second URI based on the first URI; and sending, by the target session management function, the first message to the security proxy device based on the second URI, wherein
the second URI comprises an FQDN of the security proxy device and/or an IP address of the security proxy device, the first message comprises the FQDN of the source session management function and/or the IP address of the source session management function, and the FQDN of the source session management function and/or the IP address of the source session management function are/is used by the security proxy device to send the first message to the source session management function.

3. The method according to claim 2, wherein
an FQDN in the second URI is the FQDN of the security proxy device, and/or an IP address in the second URI is the IP address of the security proxy device; or
an FQDN in the second URI is a telescopic FQDN, and the telescopic FQDN comprises the FQDN of the security proxy device.

4. The method according to any one of claims 1 to 3, wherein the first information comprises the identifier of the communication network to which the source session management function belongs; and
that the target session management function determines, based on the first information, that a communication network to which the user equipment belongs changes comprises:
when the identifier of the communication network to which the source session management function belongs is different from an identifier of a communication network to which the target session management function belongs, determining, by the target session management function, that the communication network to which the user equipment belongs changes.

5. The method according to any one of claims 1 to 3, wherein the first information comprises the address information of the source session management function; and
that the target session management function determines, based on the first information, that a communication network to which the user equipment belongs changes comprises:
when the address information is inter-network address information of the source session management function, determining, by the target session management function, that the communication network to which the user equipment belongs changes.

6. The method according to claim 5, wherein
the inter-network address information comprises an inter-network fully qualified domain name FQDN of the source session management function and/or an inter-network internet protocol IP address of the source session management function.

7. The method according to any one of claims 1 to 3, wherein the first information is the identifier of the communication network to which the source session management function belongs; and
that the target session management function determines, based on the first information, that the communication network to which the user equipment belongs does not change comprises:
when the identifier of the communication network to which the source session management function belongs is the same as an identifier of a communication network to which the target session management function belongs, determining, by the target session management function, that the communication network to which the user equipment belongs does not change.

8. The method according to any one of claims 1 to 3, wherein the first information is the address information of the source session management function; and
that the target session management function determines, based on the first information, that the communication network to which the user equipment belongs does not change comprises:
when the address information is intra-network address information of the source session management function, determining, by the target session management function, that the communication network to which the user equipment belongs does not change.

9. The method according to claim 8, wherein
the intra-network address information comprises an intra-network FQDN of the source session management function and/or an intra-network IP address of the source session management function.

10. The method according to any one of claims 1 to 9, wherein
the first information is carried in the first uniform resource identifier URI of the session management context of the source session management function.

11. The method according to any one of claims 1 to 10, wherein the communication network to which the source session management function belongs is a home network of the user equipment, the first message comprises third information, and the third information indicates that the target session management function is a visited session management function or an intermediate session management function, or the third information indicates the communication network to which the target session management function belongs.

12. The method according to any one of claims 1 to 11, wherein
the communication network to which the source session management function belongs is the home network of the user equipment, and the communication network to which the target session management function belongs is a visited network of the user equipment;
the communication network to which the source session management function belongs is a first visited network of the user equipment, the communication network to which the target session management function belongs is a second visited network of the user equipment, and the first visited network is different from the second visited network;
the communication network to which the source session management function belongs is a first visited network of the user equipment, the communication network to which the target session management function belongs is a second visited network of the user equipment, and the first visited network is the same as the second visited network; or
the communication network to which the source session management function belongs is a visited network of the user equipment, and the communication network to which the target session management function belongs is the home network of the user equipment.

13. A communication method, wherein the method is applied to movement of user equipment from a source access and mobility management function to a target access and mobility management function, and the method comprises:
receiving, by the target access and mobility management function from the source access and mobility management function, an identifier of a communication network to which the source access and mobility management function belongs; and
when the target access and mobility management function determines, based on the identifier of the communication network to which the source access and mobility management function belongs, that a communication network to which the user equipment belongs changes, sending, by the target access and mobility management function, first information to a target session management function of the user equipment, wherein the first information comprises inter-network address information of a source session management function; and/or
when the target access and mobility management function determines, based on the identifier of the communication network to which the source access and mobility management function belongs, that the communication network to which the user equipment belongs does not change, sending, by the target access and mobility management function, the first information to the target session management function of the user equipment, wherein the first information comprises intra-network address information of the source session management function.

14. The method according to claim 13, wherein
the first information is carried in a first uniform resource identifier URI of a session management context of the source session management function.

15. The method according to claim 13 or 14, wherein
the inter-network address information is an inter-network fully qualified domain name FQDN and/or an inter-network internet protocol IP address; and/or
the intra-network address information is an intra-network FQDN and/or an intra-network IP address.

16. The method according to any one of claims 13 to 15, wherein the method further comprises:
receiving, by the target access and mobility management function, an identifier of the source session management function from the source access and mobility management function; and
obtaining, by the target access and mobility management function, the inter-network address information of the source session management function locally or from a network repository function based on the identifier of the source session management function.

17. The method according to any one of claims 13 to 16, wherein that the target access and mobility management function determines, based on the identifier of the communication network to which the source access and mobility management function belongs, that a communication network to which the user equipment belongs changes comprises:
when the identifier of the communication network to which the source access and mobility management function belongs is different from an identifier of a communication network to which the target access and mobility management function belongs, determining, by the target access and mobility management function, that the communication network to which the user equipment belongs changes.

18. The method according to any one of claims 13 to 16, wherein that the target access and mobility management function determines, based on the identifier of the communication network to which the source access and mobility management function belongs, that the communication network to which the user equipment belongs does not change comprises:
when the identifier of the communication network to which the source access and mobility management function belongs is the same as an identifier of a communication network to which the target access and mobility management function belongs, determining, by the target access and mobility management function, that the communication network to which the user equipment belongs does not change.

19. The method according to any one of claims 13 to 18, wherein
the identifier of the communication network to which the source access and mobility management function belongs is carried in a uniform resource identifier URI of a second message.

20. The method according to any one of claims 13 to 19, wherein the first information further comprises the identifier of the communication network to which the source access and mobility management function belongs.

21. The method according to any one of claims 13 to 20, wherein
the communication network to which the source access and mobility management function belongs is a home network of the user equipment, and the communication network to which the target access and mobility management function belongs is a visited network of the user equipment;
the communication network to which the source access and mobility management function belongs is a first visited network of the user equipment, the communication network to which the target access and mobility management function belongs is a second visited network of the user equipment, and the first visited network is different from the second visited network;
the communication network to which the source access and mobility management function belongs is a first visited network of the user equipment, the communication network to which the target access and mobility management function belongs is a second visited network of the user equipment, and the first visited network is the same as the second visited network; or
the communication network to which the source access and mobility management function belongs is a visited network of the user equipment, and the communication network to which the target access and mobility management function belongs is a home network of the user equipment.

22. A communication method, wherein the method is applied to movement of user equipment from a source session management function to a target session management function, and the method comprises:
receiving, by the source session management function, a first message from the target session management function, wherein the first message is used to obtain a session management context of the user equipment, the first message comprises third information, and the third information indicates that the target session management function is a visited session management function or an intermediate session management function, or the third information indicates a communication network to which the target session management function belongs; and
sending, by the source session management function, the session management context of the user equipment to the target session management function based on the first message.

23. The method according to claim 22, wherein the sending, by the source session management function, the session management context of the user equipment to the target session management function based on the first message comprises:
when the source session management function receives the first message from the target session management function by using a security proxy device, sending, by the source session management function, the session management context of the user equipment to the target session management function by using the security proxy device; and/or
when the source session management function receives the first message from the target session management function without using the security proxy device, sending, by the source session management function, the session management context of the user equipment to the target session management function without using the security proxy device.

24. The method according to claim 22 or 23, wherein the sending, by the source session management function, the session management context of the user equipment to the target session management function based on the first message comprises:
when the third information in the first message indicates that the target session management function is the visited session management function, sending, by the source session management function, a roaming session management context of the user equipment to the target session management function;
when the third information in the first message indicates that the target session management function is the intermediate session management function, sending, by the source session management function, a non-roaming session management context of the user equipment to the target session management function;
when the third information in the first message indicates the communication network to which the target session management function belongs, and the communication network to which the target session management function belongs is different from a communication network to which the source session management function belongs, sending, by the source session management function, the roaming session management context of the user equipment to the target session management function; and/or
when the third information in the first message indicates the communication network to which the target session management function belongs, and the communication network to which the target session management function belongs is the same as the communication network to which the source session management function belongs, sending, by the source session management function, the non-roaming session management context of the user equipment to the target session management function.

25. The method according to any one of claims 22 to 24, wherein
the communication network to which the source session management function belongs is a home network of the user equipment, and the communication network to which the target session management function belongs is a visited network of the user equipment;
the communication network to which the source session management function belongs is a first visited network of the user equipment, the communication network to which the target session management function belongs is a second visited network of the user equipment, and the first visited network is different from the second visited network;
the communication network to which the source session management function belongs is a first visited network of the user equipment, the communication network to which the target session management function belongs is a second visited network of the user equipment, and the first visited network is the same as the second visited network; or
the communication network to which the source session management function belongs is a visited network of the user equipment, and the communication network to which the target session management function belongs is a home network of the user equipment.

26. A communication apparatus, comprising:
a processor, configured to execute a computer program stored in a memory, to enable the apparatus to perform the method according to any one of claims 1 to 12, the method according to any one of claims 13 to 21, or the method according to any one of claims 22 to 25.

27. The apparatus according to claim 26, wherein the apparatus further comprises the memory.

28. A computer-readable storage medium, wherein the computer-readable storage medium stores a computer program, and when the computer program is run on a computer, the computer is enabled to perform the method according to any one of claims 1 to 12, the method according to any one of claims 13 to 21, or the method according to any one of claims 22 to 25.

29. A computer program product, wherein the computer program product comprises instructions used to perform the method according to any one of claims 1 to 12, instructions used to perform the method according to any one of claims 13 to 21, or instructions used to perform the method according to any one of claims 22 to 25.

30. A communication system, comprising a target session management function, a target access and mobility management function, and a source session management function, wherein
the target session management function is configured to perform the method according to any one of claims 1 to 12;
the target access and mobility management function is configured to perform the method according to any one of claims 12 to 21; and
the source session management function is configured to perform the method according to any one of claims 22 to 25.
